# FASCICULE DE BREVET EUROPEEN

(11) **EP 4 630 197 B1**
(45) Date de publication et mention de la délivrance du brevet: **09.09.2026**
(21) Numéro de dépôt: 23818478.2
(22) Date de dépôt: 06.12.2023
(51) Int. Cl.: B23Q 17/22, B29D 30/54

(54) **DISPOSITIF D' ENLÈVEMENT DE MATIÈRE COMPRENANT UN SYSTÈME DE DÉTECTION PAR IMPÉDANCE PERMETTANT DE DÉTECTER L' ENTRÉE EN CONTACT DE L' OUTIL AVEC UN RENFORT MÉTALLIQUE CONTENU DANS L' OBJET TRAVAILLÉ**
VORRICHTUNG ZUM ABTRAGEN VON MATERIAL MIT EINEM IMPEDANZERFASSUNGSSYSTEM ZUR ERFASSUNG DES KONTAKTS DES WERKZEUGS MIT EINER IM WERKSTÜCK ENTHALTENEN METALLVERSTÄRKUNG
DEVICE FOR REMOVING MATERIAL COMPRISING AN IMPEDANCE DETECTION SYSTEM FOR DETECTING THE CONTACT OF THE TOOL WITH A METAL REINFORCEMENT CONTAINED IN THE WORK OBJECT

(30) Priorité: 09.12.2022 FR 2213096
(43) Date de publication de la demande: 15.10.2025
(73) Titulaire: COMPAGNIE GENERALE DES ETABLISSEMENTS MICHELIN, 63000 Clermont-Ferrand (FR)
(72) Inventeur: RAMZ, Frédéric, 63040 CLERMONT-FERRAND CEDEX 09 (FR); MONTOY, Aurélien, 63040 CLERMONT-FERRAND CEDEX 09 (FR); LUTZ, Matthieu, 63040 CLERMONT-FERRAND CEDEX 09 (FR); ROJDA, Matthieu, 63040 CLERMONT-FERRAND CEDEX 09 (FR)
(74) Mandataire: M.F.P. Michelin
(86) Numéro de dépôt international: PCT/EP2023/084544
(87) Numéro de publication internationale: WO 2024/121239

(56) Documents cités:
- EP-A1- 2 151 725
- EP-A1- 2 165 803
- WO-A1-2015/100030
- DE-A1- 102015 224 441

## Description

La présente invention concerne le domaine général des dispositifs et des procédés d'enlèvement de matière destinés à retirer un matériau électriquement isolant qui recouvre un insert électriquement conducteur sans endommager ledit insert.

La présente invention trouve plus particulièrement application dans le domaine du traitement des bandages, notamment des bandages pneumatiques, qui comprennent au moins une couche de gomme, formant de fait un revêtement électriquement isolant, et au moins une nappe de renfort comprenant des câbles de renfort métalliques, formant de fait des inserts électriquement conducteurs, bandages dont on souhaite retirer au moins une partie de la couche de gomme, par exemple à des fins de réparation de la carcasse du bandage concerné en vue du rechapage dudit bandage.

Lors du processus de rechapage de bandages pneumatiques, notamment de bandages pneumatiques destinés aux véhicules poids-lourds, il est connu d'inspecter la carcasse à rechaper afin d'y déceler d'éventuels dommages, tels que des trous, des arrachements de gomme, des coupures, ou des traces de corrosion des câbles de renfort, et, lorsque cela est possible, de réparer ces dommages avant de poser une bande de roulement neuve sur la carcasse. A l'inverse, si la réparation est impossible, la carcasse est mise au rebut.

A titre d'exemple, il est connu, lorsque la carcasse présente une coupure dans sa couche de gomme superficielle, de creuser ladite couche de gomme sur toute l'étendue de la coupure, jusqu'à atteindre les câbles de renfort sous-jacents, afin de vérifier que les câbles de renfort n'ont pas été eux-aussi endommagés. Si les câbles de renfort sont intacts, l'évidement est ensuite rebouché au moyen d'un enduit de réparation à base de gomme.

Jusqu'à présent, la détection des dommages s'opère visuellement, tandis que les tâches de creusage de la gomme puis de réparation sont réalisées manuellement. En particulier, l'opération de creusage est généralement effectuée par abrasion, au moyen d'une brosse à poils métalliques portée par l'opérateur. Ces différentes opérations d'inspection puis de réparation des carcasses requièrent donc la présence d'un opérateur bien formé et particulièrement adroit.

Il est par ailleurs connu, pour mettre la carcasse du bandage à nu en vue du rechapage de ladite carcasse, de retirer la couche de gomme correspondant à la bande de roulement usagée au moyen d'une machine qui comprend d'une part un tambour rotatif, sur lequel le bandage usagé est fixé puis entraîné en rotation, et d'autre part un outil d'enlèvement de matière, tel qu'une râpe, qui vient en appui contre le bandage pour retirer progressivement la gomme.

WO 2015/100030 A1 divulgue un dispositif d'enlèvement de matière selon le préambule de la revendication 1. Afin de ne pas endommager les câbles de renfort lors de cette opération d'enlèvement de la gomme, le document US-9,669,594 a proposé de mettre en place un système de détection inductif qui comprend d'une part une bobine d'induction permettant de générer un champ magnétique qui provoque l'apparition d'une tension induite dans les câbles de renfort, et d'autre part un capteur de tension qui détecte une élévation du potentiel de l'outil lorsque celui-ci entre en contact avec lesdits câbles de renfort ainsi mis sous tension.

Un inconvénient d'un tel dispositif est qu'il est nécessaire d'isoler électriquement l'outil et son porte-outil, et plus particulièrement de les séparer de la masse électrique du reste de la machine, pour que l'outil puisse adopter le potentiel des câbles de renfort lorsqu'il entre en contact avec ces derniers. Ceci complique la réalisation de la machine, et peut potentiellement présenter un danger de choc électrique pour l'opérateur amené à intervenir sur la machine. En effet, il existe un risque que l'outil ou le carter protégeant l'outil, non relié à la masse, se retrouve accidentellement mis sous tension, par exemple dans l'éventualité où le moteur entraînant l'outil souffrirait d'un défaut électrique.

Les objets assignés à l'invention visent par conséquent à remédier aux inconvénients susmentionnés et proposer un dispositif d'enlèvement de matière destiné à travailler un objet comprenant un revêtement électriquement isolant qui recouvre au moins un insert électriquement conducteur, et plus particulièrement un dispositif d'enlèvement de gomme sur des bandages, qui tout en présentant une structure simple, compacte et sûre, permette un enlèvement de matière automatique, fiable et reproductible, sans danger pour les opérateurs qui interviennent sur le dispositif et qui préserve l'intégrité structurelle du ou des inserts contenus dans l'objet duquel on enlève la matière.

Les objets assignés à l'invention sont atteints au moyen d'un dispositif d'enlèvement de matière destiné à travailler un objet, tel qu'un bandage pneumatique, comprenant un revêtement électriquement isolant qui recouvre au moins un insert électriquement conducteur, ledit dispositif comprenant au moins un outil d'enlèvement de matière qui est agencé de manière à pouvoir enlever du revêtement électriquement isolant de l'objet, ledit dispositif étant caractérisé en ce qu'il comprend un système de détection permettant de détecter, par une mesure d'impédance, une entrée en contact de l'outil d'enlèvement de matière avec l'insert électriquement conducteur, ledit système de détection comprenant :
- une première électrode qui est agencée pour venir se placer en vis-à-vis de l'objet, à distance de l'insert électriquement conducteur, de sorte à former avec ledit insert électriquement conducteur un dipôle, dit « premier dipôle », dont une première borne est formée par la première électrode et une seconde borne est formée par l'insert électriquement conducteur,
- une seconde électrode qui est associée à l'outil d'enlèvement de matière de telle manière que lorsque l'outil d'enlèvement de matière entre en contact avec l'insert électriquement conducteur, une connexion électrique s'établit entre ladite seconde électrode et ledit insert électriquement conducteur formant la seconde borne du premier dipôle,
- une unité de contrôle qui est agencée pour mesurer une impédance d'un circuit de détection contenant le premier dipôle et pour détecter une variation d'impédance dudit circuit de détection causée par la connexion électrique du premier dipôle avec la seconde électrode provoquée par l'entrée en contact de l'outil d'enlèvement de matière avec l'insert électriquement conducteur.

Avantageusement, le système de détection selon l'invention exploite la structure même de l'objet travaillé en considérant que tout ou partie de ladite structure de l'objet peut être assimilée à un dipôle électrique qui va, de fait, posséder intrinsèquement des propriétés d'impédance, notamment d'impédance capacitive, qui vont varier, lors d'une opération d'enlèvement de matière, du fait de la modification de structure induite par ladite opération d'enlèvement de matière, d'une façon qui sera détectable par un circuit de détection adapté.

Le système de détection par mesure d'impédance selon l'invention est donc particulièrement simple et compact à mettre en œuvre, et de surcroît très polyvalent puisqu'il peut s'adapter aisément à des objets de dimensions et de structures diverses, par exemple à des bandages présentant une variété de tailles et/ou d'architectures, moyennant quelques réglages simples de l'unité de contrôle, tels qu'une simple redéfinition de seuils de variation d'impédance considérés comme représentatifs de l'entrée en contact de l'outil d'enlèvement de matière avec un insert électriquement conducteur.

En outre, du fait qu'il est possible d'évaluer une impédance et les variations de celle-ci en mesurant des courants relativement faibles générés par une tension d'excitation particulièrement basse, et ce de surcroît en conservant une connexion de l'outil d'enlèvement de matière à la masse du dispositif, le système de détection selon l'invention ne présente absolument aucun danger électrique ni pour la machine, ni pour l'opérateur.

Par ailleurs, l'invention peut, de façon plus spécifique, comme on le verra par la suite, tirer profit de la structure d'un objet qui alterne matériau conducteur et matériau isolant pour créer un premier dipôle de type condensateur, qui maintient une isolation entre sa première armature et sa seconde armature, et donc entre la première électrode et la seconde électrode, y compris lorsque l'outil et donc la seconde électrode vient toucher l'insert conducteur. Ceci autorise notamment le raccordement de la seconde électrode à la masse du dispositif, ce qui simplifie la structure du système de détection et améliore la sécurité du dispositif.

Le système de détection selon l'invention présente par ailleurs une excellente sensibilité et un temps de réponse très court, notamment lorsqu'il repose sur une mesure d'impédance capacitive, ce qui permet de détecter quasi-instantanément l'apparition d'un contact entre l'outil d'enlèvement de matière et l'insert en matériau conducteur, et donc de stopper automatiquement et quasi-instantanément l'opération de creusage sitôt que l'outil d'enlèvement de matière atteint l'insert, et donc sans que l'outil d'enlèvement de matière n'ait le temps d'endommager l'insert.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

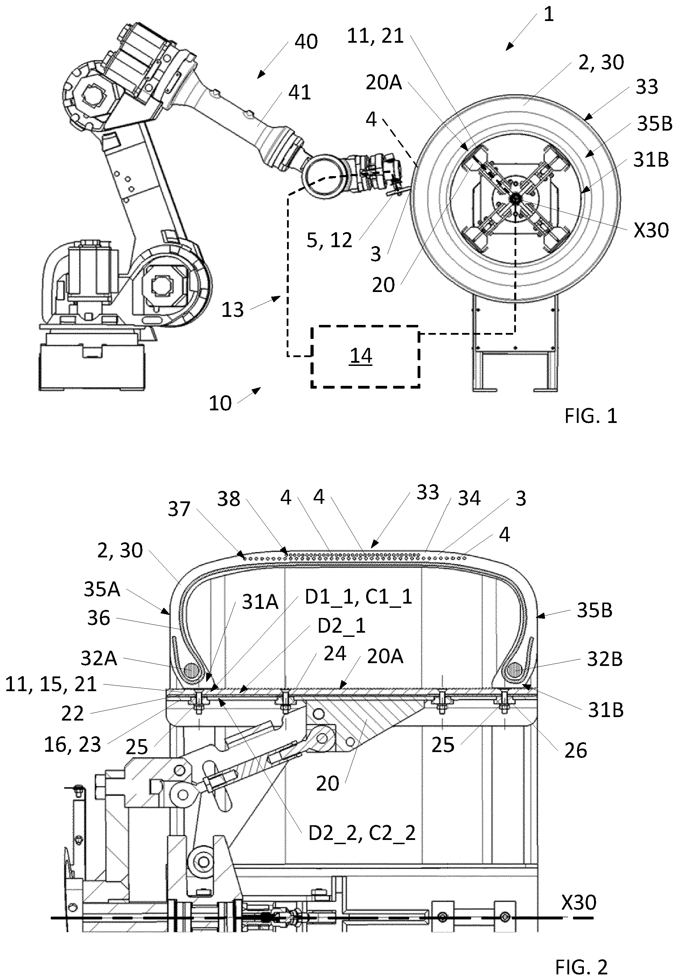

La figure 1 illustre, selon une vue d'ensemble de face, un exemple de dispositif selon l'invention, destiné à enlever de la gomme de bandages pneumatiques, et qui comprend à cet effet un support agencé pour maintenir le bandage par ses talons, ledit support présentant ici quatre mors dont au moins l'un contient une première électrode.
La figure 2 est une vue de détail du dispositif de la figure 1, en coupe longitudinale, dans un plan de coupe radial contenant l'axe central du bandage et passant par l'un des mors du support.

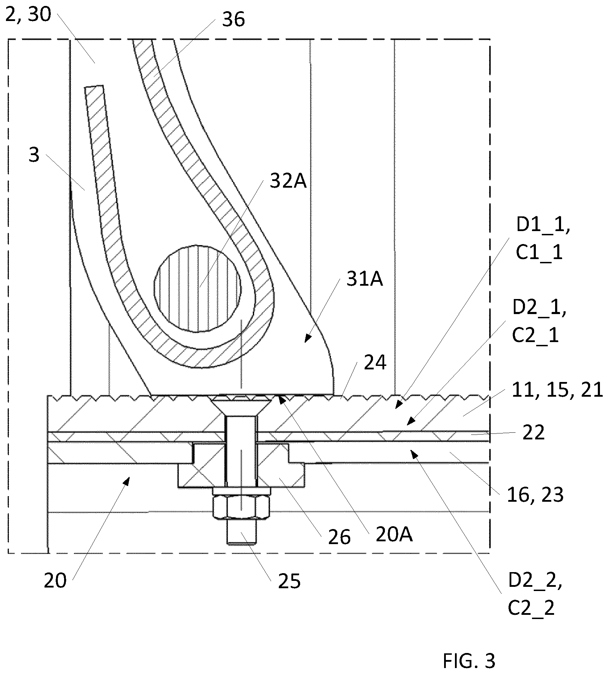

La figure 3 est une vue partielle agrandie de la figure 2, faisant apparaître la structure stratifiée du support, ici la structure stratifiée du mors, laquelle structure stratifiée permet de créer d'une part un premier condensateur avec le bandage, dans une première branche du circuit de détection correspondant au premier dipôle, et d'autre part un second condensateur formant une seconde branche du circuit de détection, parallèle à la première branche.

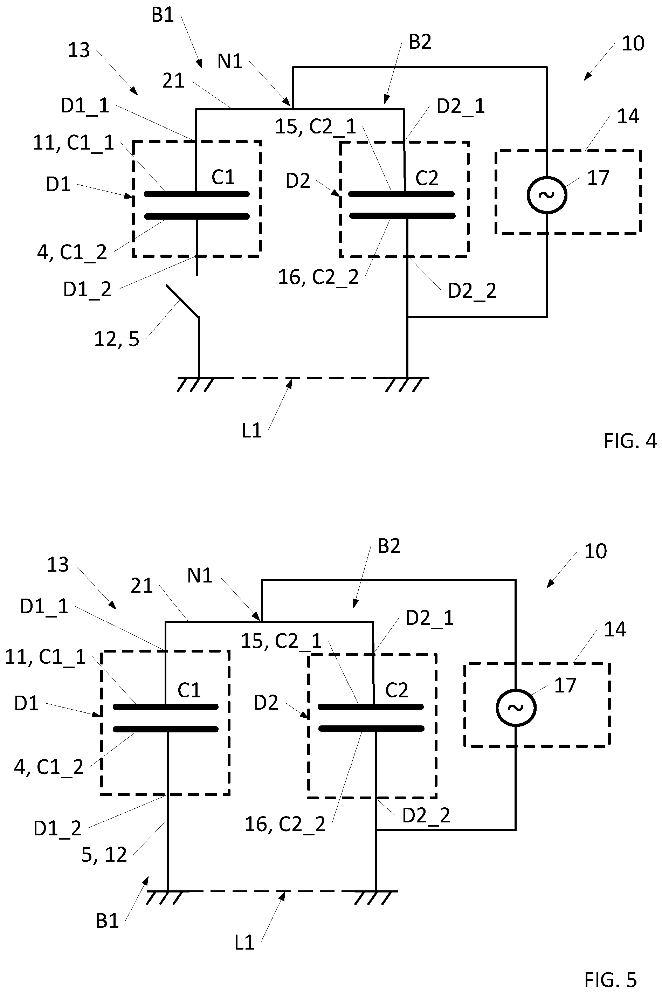

La figure 4 représente un schéma électrique équivalent d'un dispositif mis en œuvre selon l'invention, lorsque l'outil d'enlèvement de matière se trouve à distance de l'insert électriquement conducteur, et que la première branche contenant la seconde borne du premier dipôle, ici la seconde armature du premier condensateur, d'une part et la seconde électrode associée à l'outil d'enlèvement de matière d'autre part, forme un circuit ouvert.
La figure 5 est une vue du schéma électrique équivalent de la figure 4 lorsque l'outil d'enlèvement de matière entre en contact avec l'insert électriquement conducteur et ferme ainsi le circuit de la première branche en reliant la seconde borne du premier dipôle, ici la seconde armature du premier condensateur, à la seconde électrode associée à l'outil d'enlèvement de matière.

La présente invention concerne un dispositif 1 d'enlèvement de matière destiné à travailler un objet 2 qui comprend un revêtement 3 électriquement isolant, tel qu'un revêtement 3 à base de caoutchouc, qui recouvre au moins un insert 4 électriquement conducteur, tel qu'un câble de renfort métallique.

L'objet 2 peut, selon une application préférentielle de l'invention, être un bandage 30 destiné à équiper une roue ou une chenille de véhicule, par exemple un bandage 30 pneumatique.

De façon connue en soi, et tel que cela est visible sur les figures 1 et 2, un tel bandage 30 pneumatique peut comprendre un premier talon 3 1A et un second talon 31B qui sont destinés à permettre la fixation du bandage 30 sur une jante et qui contiennent à cet effet des structures annulaires de renfort dites « tringles » 32A, 32B, un sommet 33 pourvu d'une bande de roulement 34, ainsi qu'un premier flanc 35A et un second flanc 35B qui relient le sommet 33 respectivement au premier talon 31A et au second talon 31B.

Un tel bandage 30 est renforcé par une armature, ou « carcasse », qui comprend généralement une pluralité de nappes 36, 37, 38 de renfort présentant chacune une pluralité de câbles de renfort qui sont noyés dans une couche de matériau à base de caoutchouc. Plus particulièrement, le bandage 30 comprend généralement au moins une nappe carcasse 36 qui joint la première tringle 32A à la seconde tringle 32B en passant successivement par le premier flanc 35A, le sommet 33 puis le second flanc 35B, ainsi que des nappes sommet 37, 38, dont les câbles de renfort s'entrecroisent avec ceux de la nappe carcasse 36.

Dans le cas où l'objet 2 considéré est un bandage 30, le revêtement 3 isolant au sens de l'invention peut correspondre à une ou plusieurs couches à base de caoutchouc qui recouvrent le sommet 33 et/ou les flancs 35A, 35B et/ou les câbles de renfort des nappes 36, 37, 38 dudit bandage 30. On notera à ce titre qu'une application particulièrement préférentielle de l'invention concerne l'enlèvement de matière constitutive de la bande de roulement 34 qui recouvre le sommet 33 du bandage 30.

Les inserts 4 électriquement conducteurs peuvent quant à eux correspondre aux câbles de renfort métalliques qui sont présents dans une ou plusieurs des nappes 36, 37, 38 de renfort, notamment dans la nappe carcasse 36.

Par convention préférentielle, on pourra qualifier de conducteur un matériau dont la résistivité est inférieure à 10⁻⁴ Ohm.m à une température de 300 K. De même, on pourra de préférence qualifier d'isolant un matériau dont la résistivité est supérieure à 10⁶ Ohm.m à une température de 300 K. Bien entendu, plus généralement, la résistivité du matériau dit « isolant » au sens de l'invention sera toujours, relativement à la résistivité du matériau dit « conducteur », strictement supérieure à la résistivité dudit matériau dit « conducteur », par exemple au moins 10³ fois (mille fois) supérieure, au moins 10⁵ fois (cent mille fois) supérieure, de préférence au moins 10⁶ fois (un million de fois) supérieure, voire au moins 10⁸ fois (cent millions de fois) supérieure, à la résistivité du matériau dit « conducteur ».

Tel que cela est visible sur la figure 1, le dispositif 1 comprend au moins un outil 5 d'enlèvement de matière qui est agencé de manière à pouvoir enlever du revêtement 3 électriquement isolant de l'objet 2.

Ledit outil 5 d'enlèvement de matière est conçu pour pouvoir arracher du revêtement 3 par coupe ou par abrasion.

Ledit outil 5 d'enlèvement de matière peut par exemple être formé par une brosse, plus particulièrement et préférentiellement une brosse à poils métalliques, encore plus préférentiellement une brosse rotative à poils métalliques. En variante, l'outil 5 d'enlèvement de matière peut être formé par un couteau, par une râpe, par une carde, par une fraise ou par une meule.

Selon l'invention, le dispositif 1 comprend un système de détection 10 qui permet de détecter, par une mesure d'impédance, une entrée en contact de l'outil 5 d'enlèvement de matière avec l'insert 4 électriquement conducteur.

Ledit système de détection 10 comprend tout d'abord, tel que cela est visibles sur les figures 1, 2, 3, 4 et 5, une première électrode 11 qui est agencée pour venir se placer en vis-à-vis de l'objet 2, à distance de l'insert 4 électriquement conducteur, de sorte à former avec ledit insert 4 électriquement conducteur un dipôle D1, dit « premier dipôle » D1, dont une première borne D1_1 est formée par la première électrode 11 et une seconde borne D1_2 est formée par l'insert 4 électriquement conducteur.

Plus préférentiellement, et selon une caractéristique qui peut constituer une invention à part entière, le système de détection 10 est un système de détection 10 capacitif au sein duquel la première électrode 11 est agencée pour venir se placer en vis-à-vis de l'objet 2, à distance de l'insert 4 électriquement conducteur, de sorte à former avec ledit insert 4 électriquement conducteur un condensateur C1, dit « premier condensateur » C1, dont une première armature C1_1 est formée par la première électrode 11, qui correspond ici à la première borne D1_1 du premier dipôle D1, et une seconde armature C1_2 est formée par l'insert 4 électriquement conducteur, qui correspond ici à la seconde borne D1_2 du premier dipôle D1.

De préférence, la première électrode 11 sera agencée de manière à pouvoir venir mécaniquement au contact de l'objet 2, et plus préférentiellement au contact d'une zone de l'objet 2 qui est recouverte par une couche externe en matériau électriquement isolant, laquelle couche externe peut à ce titre être considérée, dans l'absolu, comme une portion du revêtement 3 électriquement isolant au sens de l'invention, même si cette couche externe forme de préférence une portion du revêtement 3 qui n'est pas destinée à être enlevée de l'objet 2 par l'outil 5 d'enlèvement de matière, et qui est seulement voisine d'une autre zone du revêtement 3 qui, elle, est destinée à être enlevée par l'outil 5. En tout état de cause, la présence d'une telle couche externe en matériau électriquement isolant, appartenant à l'objet 2, permet de séparer électriquement la première électrode 11 du reste de la structure de l'objet 2, et en particulier de séparer la première électrode 11 de l'insert 4 électriquement conducteur. En particulier, cette couche externe en matériau isolant peut donc contribuer à former le diélectrique du premier condensateur C1, c'est-à-dire l'espace électriquement isolant, ou potentiellement l'espace combinant des couches électriquement isolantes et des éléments électriquement conducteurs, qui sépare la première armature C1_1 de la seconde armature C1_2 dudit premier condensateur C1.

Dans la situation où l'objet 2 est un bandage 30 pneumatique, la première électrode 11 pourra par exemple être agencée, tel que cela est visible sur les figures 1, 2 et 3, pour venir au contact de la portion du revêtement 3 constituée par l'un et/ou l'autre des bourrelets à base de caoutchouc formant les premier et second talons 31A, 31B dudit bandage 30, et qui enveloppent les tringles 32A, 32B correspondantes.

De préférence, la première électrode 11 est intégrée au sein d'un support 20, tel qu'un mors, qui présente une face d'appui 20A qui est destinée à venir au contact de l'objet 2 afin de maintenir ledit objet 2 pendant que celui-ci est soumis à l'action de l'outil 5 d'enlèvement de matière.

Un tel agencement contribue à la simplicité et à la compacité du système de détection 10, et plus globalement du dispositif 1. Cet agencement favorise en outre un positionnement stable de la première électrode 11 par rapport à l'objet 2, et plus particulièrement par rapport à l'insert 4 électriquement conducteur, ce qui garantit une bonne précision et une bonne reproductibilité des mesures d'impédance qui dépendent de ce positionnement de la première électrode 11 par rapport à l'insert 4 électriquement conducteur.

Dans la situation où l'objet 2 est un bandage 30 pneumatique, le support 20 peut comprendre un ensemble de mors, ici par exemple quatre mors, qui sont répartis en azimut, de préférence équirépartis en azimut, autour de l'axe central X30 du bandage 30, axe central X30 qui correspond au futur axe de rotation de la roue recevant ledit bandage 30. Lesdits mors sont alors de préférence agencés pour venir chacun en appui radial centrifuge contre au moins l'un des, et de préférence simultanément contre chacun des, premier et second talons 31A, 31B du bandage 30, tel que cela est illustré sur les figures 1 et 2. La première électrode 11 pourra avantageusement être logée dans l'un au moins desdits mors.

On notera que la multiplication et la répartition des mors permet également de subdiviser et de répartir la première électrode 11 en autant de sous-électrodes, et ainsi d'étendre la superficie globale de ladite première électrode 11 tout en répartissant cette superficie sur une vaste zone de l'objet 2, ici sur le pourtour des premier et second talons 31A, 31B, ce qui améliore la fiabilité et la sensibilité du système de détection 10.

Le système de détection 10 comprend également une seconde électrode 12 qui est associée à l'outil 5 d'enlèvement de matière de telle manière que lorsque l'outil 5 d'enlèvement de matière entre en contact avec l'insert 4 électriquement conducteur, une connexion électrique s'établit entre ladite seconde électrode 12 et ledit insert 4 électriquement conducteur qui forme la seconde borne D1_2 du premier dipôle D1, ici plus préférentiellement la seconde armature C1_2 du premier condensateur C1.

Ainsi, lorsque l'outil 5 d'enlèvement de matière atteint l'insert 4 électriquement conducteur, cela a pour effet de fermer une branche B1 de circuit, dite « première branche » B1, d'un circuit électrique 13 du système de détection 10 capacitif, ci-après « circuit de détection 13 », première branche B1 qui comprend le premier dipôle D1, ici le premier condensateur C1, et la seconde électrode 12. Cette fermeture de la première branche B1 va induire un changement d'impédance, plus préférentiellement un changement d'impédance capacitive, aux bornes de ladite première branche B1, et plus globalement dans le circuit de détection 13 du système de détection 10, lequel changement d'impédance sera perçu par ledit système de détection 10 capacitif comme cela sera détaillé plus bas.

De préférence, par simplicité de réalisation, la seconde électrode 12 est formée par une partie conductrice, plus préférentiellement une partie métallique, de l'outil 5 d'enlèvement de matière. Par exemple, lorsque l'outil 5 d'enlèvement de matière est formé par une brosse, la seconde électrode 12 peut être formée par les poils métalliques de ladite brosse, eux-mêmes reliés à un conducteur, tel que le carter de l'outil 5.

Le contact électrique entre la seconde électrode 12 et l'insert 4 électriquement conducteur s'établit donc avantageusement aussitôt que l'outil 5 d'enlèvement de matière atteint ledit insert 4 électriquement conducteur.

Le système de détection 10 selon l'invention comprend en outre une unité de contrôle 14 qui est agencée pour mesurer une impédance d'un circuit de détection 13 contenant le premier dipôle D1 et pour détecter une variation d'impédance dudit circuit de détection 13 causée par la connexion électrique du premier dipôle D1 avec la seconde électrode 12 provoquée par l'entrée en contact de l'outil 5 d'enlèvement de matière avec l'insert 4 électriquement conducteur.

Plus particulièrement, ladite unité de contrôle 14 est agencée pour détecter une variation d'impédance du circuit de détection 13, de préférence une variation d'impédance capacitive du circuit de détection 13, qui est causée par la connexion électrique du premier condensateur C1 avec la seconde électrode 12, connexion qui est provoquée par l'entrée en contact de l'outil 5 d'enlèvement de matière avec l'insert 4 électriquement conducteur qui forme la seconde armature C1_2 du premier condensateur C1.

Ainsi, toute variation d'impédance du circuit de détection 13, et plus particulièrement toute variation d'impédance capacitive dudit circuit de détection 13, qui est représentative d'une mise à nu de l'insert 4 électriquement conducteur par l'outil 5 d'enlèvement de matière est immédiatement perçue par l'unité de contrôle 14 qui peut alors le signaler à l'opérateur et, plus préférentiellement, prendre automatiquement des mesures adaptées pour éviter tout endommagement de l'insert 4 électriquement conducteur par l'outil 5 d'enlèvement de matière.

A cet effet, l'unité de contrôle 14 est de préférence agencée pour, lorsqu'elle détecte une entrée en contact de l'outil 5 d'enlèvement de matière avec l'insert 4 électriquement conducteur, stopper l'action de l'outil 5 d'enlèvement de matière sur l'objet 2.

Pour stopper l'action de l'outil 5 d'enlèvement de matière sur l'objet 2, l'unité de contrôle 14 peut par exemple éloigner l'outil 5 d'enlèvement de matière de l'objet 2, ou bien encore stopper le mouvement de coupe qui anime l'outil 5 d'enlèvement de matière relativement à la surface de l'objet 2, typiquement en stoppant la rotation de la brosse rotative lorsque l'outil 5 d'enlèvement de matière est formé par une telle brosse.

Avantageusement, le système de détection 10 capacitif permet d'ajuster automatiquement et au cas par cas la profondeur de creusage, et ainsi d'adapter à l'épaisseur effective de la couche du revêtement 3 l'action et la profondeur de pénétration de l'outil 5 d'enlèvement de matière. Ainsi, l'invention permet notamment d'enlever la totalité de l'épaisseur de la couche de revêtement 3, par exemple la totalité de l'épaisseur de la bande de roulement 34, sans risque d'endommager l'insert 4 électriquement conducteur, et en particulier sans risque de sectionner un câble présent dans une nappe 36, 37, 38 de renfort ou d'altérer ledit câble par une surchauffe (bleuissement) qui serait causée par un frottement intense de l'outil 5 contre ledit câble.

En outre, le fait que le système de détection 10, et plus particulièrement le fonctionnement du circuit 13 de détection, repose sur une mesure d'impédance qui dépend de propriétés électriques déterminées par l'objet 2 lui-même, et plus particulièrement le caractère préférentiellement capacitif dudit système de détection 10 lorsque le circuit de détection 13 repose sur au moins un (premier) condensateur C1 dont la structure, et donc les propriétés électriques, sont déterminées par l'objet 2 lui-même, rend possible d'exciter le circuit de détection 13, et de réaliser une mesure d'impédance, au moyen d'un signal électrique, dit « signal d'excitation », qui présente une faible amplitude et une faible intensité, et qui ne génère donc aucun risque électrique, ni pour le dispositif 1, ni pour l'opérateur.

De préférence, l'unité de contrôle 14 applique ainsi au circuit de détection 13 un signal d'excitation qui représente une différence de potentiel dont la valeur maximale est égale ou inférieure à 50V, voire égale ou inférieure à 10V, ou même égale ou inférieure à 5V.

Avantageusement, une telle précaution permet de disposer intrinsèquement d'un système de détection 10 et plus globalement d'un dispositif 1 qui sont parfaitement sûrs pour l'opérateur et conformes aux normes de sécurité les plus exigeantes, sans qu'il soit nécessaire d'équiper ledit système de détection 10 ou le dispositif 1 d'équipements de sécurité spécifiques qui deviennent obligatoires lorsque l'on utilise des tensions plus élevées, typiquement des tensions supérieures à 50V. Ici encore, l'invention permet donc de conserver un système de détection 10 et un dispositif relativement simples, compacts et peu onéreux.

Par ailleurs, le signal de détection que l'unité de contrôle 14 applique au circuit de détection 13 est de préférence un signal d'excitation alternatif, dont la fréquence sera de préférence égale ou supérieure à 10 kHz, préférentiellement égale ou supérieure à 20 kHz, et de préférence encore égale ou supérieure à 100kHz. La fréquence est de préférence inférieure ou égale à 500 MHz, et de préférence encore égale ou inférieure à 10 MHz. Par exemple, ladite fréquence pourra être comprise entre 10 kHz et 800 kHz, préférentiellement comprise entre 100 kHz et 600 kHz, et plus préférentiellement comprise entre 200 kHz et 500 kHz.

Une fréquence relativement élevée, typiquement égale ou supérieure à 10 kHz, et de préférence égale ou supérieure à 100kHz, confère avantageusement au système de détection 10 un temps de réponse très court lors de la mesure de l'impédance, et donc une excellente réactivité, qui permet à l'unité de contrôle 14 de détecter très tôt l'entrée en contact de l'outil d'enlèvement de matière 5 avec l'insert 4, et donc de stopper à temps l'action de l'outil 5 d'enlèvement de matière, avant que celui-ci n'endommage l'insert 4 par un contact prolongé ou trop appuyé.

Une fréquence relativement élevée, typiquement égale ou supérieure à 10 kHz, et de préférence égale ou supérieure à 100kHz, permet d'autre part d'éviter de perturber la mesure d'impédance par des signaux parasites émis par certains appareils électriques, tels que des moteurs, présents au sein du dispositif 1 ou dans l'environnement immédiat dudit dispositif.

En outre, et en particulier dans le cas où la détection repose principalement voire exclusivement sur une composante capacitive d'impédance, une fréquence relativement élevée permet de générer un courant suffisamment significatif pour que les caractéristiques dudit courant soient aisément mesurables et donc que la mesure d'impédance soit particulièrement fiable.

A titre indicatif, le signal d'excitation, que l'unité de contrôle 14 applique à la première électrode 11, formant ici préférentiellement la première armature C1_1 du premier condensateur C1, et plus particulièrement que l'unité de contrôle 14 applique entre ladite première électrode 11 et la seconde électrode 12 associée à l'outil 5 d'enlèvement de matière, pourra être un signal alternatif, de préférence sinusoïdal, qui présente une amplitude inférieure ou égale à 50V AC, de préférence inférieure ou égale à 10V AC, par exemple inférieure ou égale à 5V AC.

Le signal d'excitation pourra être généré par tout générateur 17 approprié équipant l'unité de contrôle 14, par exemple un générateur 17 de tension alternative.

Dans l'absolu, on pourrait utiliser un montage « flottant », c'est-à-dire utiliser uniquement le premier dipôle D1, ici le premier condensateur C1, déterminé par l'objet 2 lui-même, et plus globalement uniquement la première branche B1 du circuit de détection 13, pour mesurer l'impédance, et notamment l'impédance capacitive, de ladite première branche B1 et détecter une variation de cette impédance qui serait caractéristique d'une entrée en contact de l'outil 5 d'enlèvement de matière avec l'insert 4.

Cependant, pour améliorer la fiabilité du système de détection 10, et notamment pour définir une valeur d'impédance de référence Z2_ref, C2_ref par rapport à laquelle seront évaluées les variations d'impédances, valeur d'impédance de référence qui pourra de surcroît être rafraîchie juste avant chaque opération d'enlèvement de matière afin d'éviter des phénomènes de dérive imputables par exemple aux variations de température ou d'hygrométrie dans l'environnement du dispositif 1, ou bien encore pour éviter des phénomènes de parasitage liés notamment à la présence au sein du support 20 de masses métalliques qui sont de fait très proches du premier dipôle D1 et peuvent donc former des capacités parasites à l'origine par exemple de courants de fuite, les inventeurs ont découvert qu'il était préférable d'associer à la première branche B1 du circuit de détection 13 une seconde branche B2 présentant une impédance connue, et plus particulièrement de placer ainsi, dans ladite seconde branche B2, un second dipôle D2, plus particulièrement un second condensateur C2, aux caractéristiques connues.

C'est pourquoi, tel que cela est notamment visible sur les figures 4 et 5, le circuit de détection 13 comprend de préférence un second dipôle D2 qui est distinct du premier dipôle D1. Ce second dipôle D2 présente une première borne D2_1 ainsi qu'une seconde borne D2_2.

La première borne D2_1 dudit second dipôle D2 est raccordée électriquement à la première borne D1_1 du premier dipôle D1 de sorte à former un nœud N1 qui est commun au premier dipôle D1 et au second dipôle D2.

L'unité de contrôle 14 peut alors avantageusement mesurer l'impédance aux bornes D2_1, D2_2 du second dipôle D2 afin de pouvoir d'une part acquérir une valeur d'impédance de référence Z2_ref, de préférence une valeur d'impédance capacitive de référence C2_ref, dite « impédance à vide » Z2_ref, respectivement « capacité à vide » C2_ref, qui est égale à une valeur d'impédance que ladite unité de contrôle 14 mesure aux bornes D2_1, D2_2 du second dipôle D2 tandis que l'outil 5 d'enlèvement de matière se trouve à distance de l'insert 4 électriquement conducteur, et d'autre part détecter, par rapport à cette impédance à vide Z2_ref, respectivement par rapport à cette capacité à vide C2_ref, une variation d'impédance, de préférence une variation d'impédance capacitive, qui est représentative d'une connexion électrique du premier dipôle D1 avec la seconde électrode 12 lors de l'entrée en contact de l'outil 5 d'enlèvement de matière avec l'insert 4 électriquement conducteur.

Plus particulièrement, le système de détection 10 pourra de préférence comprendre une troisième électrode 15 qui correspond à la première borne D2_1 du second dipôle D2 et qui forme une première armature C2_1 d'un condensateur C2 dit « second condensateur » C2, distinct du premier dipôle D1, et plus particulièrement distinct du premier condensateur C1, et une quatrième électrode 16 qui correspond à la seconde borne D2_2 du second dipôle D2 et qui forme une seconde armature C2_2 dudit second condensateur C2.

La troisième électrode 15 formant la première armature C2_1 du second condensateur C2 est raccordée électriquement à la première électrode 11 formant la première borne D1_1 du premier dipôle D1, et plus préférentiellement formant la première armature C1_1 du premier condensateur C1, de sorte à former un nœud N1 qui est commun au premier dipôle D1 et au second condensateur C2, plus préférentiellement qui est commun au premier condensateur C1 et au second condensateur C2.

L'unité de contrôle 14 est alors agencée de manière à mesurer l'impédance aux bornes du second condensateur C2 de sorte à pouvoir détecter une variation d'impédance, ici plus particulièrement une variation d'impédance capacitive, provoquée par la connexion électrique du premier dipôle D1, ici plus préférentiellement du premier condensateur C1, avec la seconde électrode 12 lors de l'entrée en contact de l'outil 5 d'enlèvement de matière avec l'insert 4 électriquement conducteur.

De façon préférentielle, la seconde borne D1_2 du premier dipôle D1 et la seconde borne D2_2 du second dipôle D2, ici donc plus particulièrement la seconde électrode 12 et la quatrième électrode 16, sont toutes les deux raccordées électriquement à une ligne conductrice L1 commune de sorte que lesdites seconde borne D1_2 du premier dipôle D1 et seconde borne D2_2 du second dipôle D2, et plus particulièrement lesdites seconde électrode 12 et quatrième électrode 16, se trouvent à un même potentiel.

La première branche B1 et la seconde branche B2, et donc le premier dipôle D1 et le second dipôle D2, et plus particulièrement le premier condensateur C1 et le second condensateur C2, se trouvent ainsi en parallèle l'un de l'autre. La détection d'une variation d'impédance, et notamment d'une variation d'impédance capacitive, entre les deux bornes communes à ces deux branches B1, B2, c'est-à-dire entre le nœud N1 et la ligne conductrice L1 commune, est donc facile et rapide, de sorte que le système de détection 10 présente une sensibilité très fine et une bonne réactivité.

De façon particulièrement préférentielle, ladite ligne conductrice L1 commune appartient à la masse du dispositif 1, tel que cela est illustré sur les figures 4 et 5.

Ladite masse définit le potentiel de référence du dispositif 1. Ladite masse est de préférence raccordée à la terre de sorte à présenter un potentiel de référence nul.

Un tel agencement est avantageusement particulièrement pratique et simple, puisqu'il est possible de raccorder les bornes D1_2, D2_2 concernées, ici les électrodes 12, 16 concernées, à la masse en deux points distincts quelconques du dispositif 1, pourvu que ces points soient eux-mêmes reliés à la masse, ce qui permet notamment de raccorder la seconde électrode 12 et la quatrième électrode 16 au choix à tout point approprié du bâti du dispositif 1, d'un support de l'outil 5, d'un carter du dispositif 1 ou d'un carter de l'outil 5, etc., selon ce qui est le plus simple et/ou le plus robuste à mettre en œuvre.

Un tel agencement est en outre particulièrement sûr, puisque la mise à la terre évite tout risque de choc électrique accidentel pour l'opérateur.

Lorsque le circuit de détection 13 comprend une seconde branche B2 telle que décrite ci-dessus, alors le signal d'excitation mentionné plus haut peut avantageusement être appliqué aux bornes de ladite seconde branches B2, et donc plus particulièrement aux bornes D2_1, D2_2 du second dipôle D2, ici plus préférentiellement aux bornes du second condensateur C2.

Ainsi, de préférence, l'unité de contrôle 14 applique au circuit de détection 13, ici plus préférentiellement aux bornes du second condensateur C2, entre la troisième électrode 15 et la quatrième électrode 16, un signal d'excitation alternatif dont la fréquence est, comme cela a été indiqué plus haut, égale ou supérieure à 10 kHz, préférentiellement égale ou supérieure à 20 kHz, et de préférence encore égale ou supérieure à 100kHz. Cette fréquence est de préférence inférieure ou égale à 500 MHz et de préférence encore égale ou inférieure à 10 MHz. Par exemple, ladite fréquence pourra être comprise entre 10 kHz et 800 kHz, préférentiellement comprise entre 100 kHz et 600 kHz, et plus préférentiellement comprise entre 200 kHz et 500 kHz.

Comme expliqué plus haut, une fréquence suffisamment élevée permet notamment de déterminer rapidement l'impédance, et plus particulièrement la capacité équivalente, qui existe à chaque instant entre les bornes communes des deux branches B1, B2, c'est-à-dire entre le nœud N1 et la ligne conductrice commune L1, et donc de détecter quasi-instantanément une variation de ladite impédance, ici une variation d'impédance capacitive, qui signale la fermeture de la première branche B1, et donc la mise en parallèle du premier dipôle D1, ici du premier condensateur C1, avec le second dipôle D2, ici le second condensateur C2, du fait de l'établissement de la connexion entre la seconde électrode 12 associée à l'outil 5 et l'insert 4 formant la seconde borne D1_2 du premier dipôle D1, ici la seconde armature C1_2 du premier condensateur C1.

Comme indiqué plus haut, le signal d'excitation appliqué aux bornes du second condensateur C2 présente de préférence une faible amplitude en tension, ici inférieure ou égale à 50V AC, de préférence inférieure ou égale à 10V AC, voire inférieure ou égale à 5V AC.

Une basse tension est en effet suffisante pour détecter une variation d'impédance du circuit de détection 13, même relativement faible, qui est caractéristique de la fermeture de la première branche B1 et donc de la mise en parallèle du premier condensateur C1 sur le second condensateur C2. Un signal d'excitation de faible tension, et plus globalement de faible puissance, suffit donc pour conférer au système de détection 10 une bonne sensibilité.

Pour déterminer l'impédance, et donc détecter des variations de ladite impédance, l'unité de contrôle 14 sera de préférence pourvue d'appareils de mesure permettant de mesurer la tension et l'intensité du courant électrique entre deux bornes choisies, ici de préférence les bornes entre lesquelles l'unité de contrôle 14 applique le signal d'excitation, ici donc les bornes N1, L1 communes aux première et seconde branches B1, B2.

On notera que l'impédance que l'on mesure et dont on surveille les variations peut être, dans l'absolu, une composante résistive d'impédance, une composante capacitive d'impédance, une composante inductive d'impédance, une combinaison de deux composantes d'impédances parmi : composante résistive, composante capacitive, et composante inductive, ou une combinaison de trois composantes, résistive, capacitive et inductive.

A titre préférentiel, et notamment par commodité de construction et de mise en œuvre du système de détection 10 et du support 20, ainsi que pour optimiser la précision, la sensibilité, et la réactivité du système de détection, on privilégiera la mesure et la surveillance d'une composante capacitive d'impédance.

On pourra donc, par simple commodité de description, faire préférentiellement référence dans ce qui suit à un système de détection 10 reposant sur une mesure d'impédance capacitive, sans que cela ne constitue une limitation de l'invention.

De préférence, l'unité de contrôle 14 est agencée :
- pour acquérir une valeur d'impédance de référence Z2_ref, dite « impédance à vide Z2_ref », plus particulièrement une impédance capacitive de référence C2_ref dite « capacité à vide » C2_ref, qui est égale à une valeur d'impédance que ladite unité de contrôle 14 mesure aux bornes du second dipôle D2, ici une valeur d'impédance capacitive que ladite unité de contrôle 14 mesure aux bornes du second condensateur C2, tandis que l'outil 5 d'enlèvement de matière se trouve à distance de l'insert 4 électriquement conducteur,
- puis pour associer à ladite impédance à vide Z2_ref, ici à ladite capacité à vide C2_ref, un seuil d'alerte Z_thresh, C_thresh prédéterminé qui est considéré comme représentatif, par rapport à l'impédance à vide Z2_thresh, ici par rapport à la capacité à vide C2_ref, d'une variation d'impédance aux bornes D2_1, D2_2 du second dipôle, ici d'une variation d'impédance capacitive aux bornes du second condensateur C2, causée par une entrée en contact de l'outil 5 d'enlèvement de matière avec l'insert 4 électriquement conducteur,
- puis pour détecter un franchissement dudit seuil d'alerte Z_tresh, C_thresh par l'impédance effectivement mesurée aux bornes du second dipôle D2, ici l'impédance capacitive effectivement mesurée aux bornes du second condensateur C2.

L'impédance à vide Z2_ref , ici plus particulièrement la capacité à vide C2_ref, correspondra ici à l'impédance que l'on mesure aux bornes de la seconde branche B2 tandis que la première branche B1 est ouverte. En pratique, ladite capacité à vide C2_ref est donc égale à la capacité intrinsèque du second condensateur C2.

Le seuil d'alerte Z_thresh, C_thresh pourra être par exemple défini comme la somme de l'impédance à vide Z2_ref, plus particulièrement de la capacité à vide C2_ref, et d'un écart Delta_Z, respectivement Delta_C, prédéterminé que l'on aura identifié, par exemple de façon empirique par une campagne d'essais menée sur un échantillon de plusieurs objets 2, comme étant représentatif de la variation d'impédance que cause, aux bornes de la seconde branche B2, et donc ici plus particulièrement aux bornes du second condensateur C2, la fermeture de la première branche B1, c'est-à-dire l'ajout, en parallèle du second dipôle D2, ici en parallèle du second condensateur C2, du premier dipôle D1, ici du premier condensateur C1, qui se crée lorsque la seconde électrode 12 associée à l'outil 5 d'enlèvement de matière entre au contact de l'insert 4 qui forme la seconde borne D1_2 du premier dipôle D1 et donc ici la seconde armature C1_2 du premier condensateur C1 : Z_thresh = Z2_ref + Delta_Z, ou, plus particulièrement : $C_thresh = C 2 _ref + Delta_C$

Avantageusement, en mesurant l'impédance à vide Z2_ref, ici la capacité à vide C2_ref, du système de détection 10 préalablement à chaque nouvelle opération d'enlèvement de matière, on identifie la référence par rapport à laquelle se produira la variation d'impédance, c'est-à-dire que l'on fixe le « zéro » de la mesure d'impédance, ce qui permet de recalibrer le système de détection 10 à chaque opération et ainsi de gagner en précision. En particulier, ce recalibrage permet d'éviter les dérives qui induisent des variations dans le temps de l'impédance à vide Z2_ref, et plus particulièrement de la capacité à vide C2_ref, dérives qui peuvent notamment résulter de variations de température ou d'hygrométrie auxquelles sont exposés le dispositif 1, le support 20 et le système de détection 10.

En pratique, l'objet 2 étant en place sur le support 20, et avant que l'outil 5 d'enlèvement de matière ne s'approche de l'objet 2 et n'engage le revêtement 3 électriquement isolant, l'unité de contrôle 14 applique aux bornes N1, L1 de la seconde branche B2, ici aux bornes du second condensateur C2, le signal d'excitation, et mesure le courant pour en déduire l'impédance à vide Z2_ref, ici la capacité à vide C2_ref. L'unité de contrôle 14 associe alors à ladite impédance à vide Z2_ref, ici à ladite capacité à vide C2_ref, un seuil d'alerte Z_thresh, respectivement C_thresh, typiquement en ajoutant à l'impédance à vide Z2_ref, ici à la capacité à vide C2_ref, un écart Delta_Z, respectivement un écart Delta_C prédéterminé, qui pourra être défini par exemple soit à partir d'une valeur fixe renseignée par l'utilisateur, soit à partir d'un tableau ou d'une loi pré-établie, éventuellement stockée dans une mémoire de l'unité de contrôle 14.

L'unité de contrôle 14 continue d'appliquer, de façon permanente tandis que l'opération d'enlèvement de matière débute et se poursuit, le signal d'excitation aux bornes de la seconde branche B2, afin de surveiller l'évolution du courant qui arrive au nœud N1 pendant que l'outil 5 d'enlèvement de matière creuse le revêtement 3 électriquement isolant et s'approche ainsi de l'insert 4 enfoui sous ledit revêtement 3.

De la sorte, l'unité de contrôle 14 mesure à chaque instant l'impédance entre les bornes de la seconde branche B2, ici entre le nœud N1 et la ligne conductrice commune L1, et donc peut comparer à chaque instant la valeur effective de l'impédance au seuil d'alerte Z_thresh, C_thresh fixé.

Sitôt qu'un franchissement du seuil d'alerte Z_thresh, C_thresh est détecté, franchissement qui résulte de préférence ici d'une augmentation de la capacité apparente aux bornes de la seconde branche B2 provoquée par l'ajout, en parallèle de ladite seconde branche B2, de la première branche B1 contenant le premier condensateur C1, de sorte que la capacité totale aux bornes communes des deux branches B1, B2 correspond à la somme des capacités individuelles du premier condensateur C1 et du second condensateur C2, l'unité de contrôle 14 en déduit que l'outil 5 d'enlèvement de matière est entré en contact avec l'insert 4 et réagit en prenant des mesures adaptées, par exemple en envoyant à un système qui gère le positionnement de l'outil 5 par rapport à l'objet 2 et/ou l'entraînement relatif de l'outil 5 par rapport à l'objet 2 selon un mouvement de coupe souhaité (ou réciproquement, qui gère le positionnement de l'objet 2 par rapport à l'outil 5 et/ou l'entraînement relatif de l'objet 2 par rapport à l'outil 5) une commande permettant de faire cesser le mouvement de coupe et/ou d'éloigner l'outil 5 de l'objet 2, et donc de l'insert 4 mis à nu.

A titre indicatif, la valeur de la capacité à vide C2_ref pourra être généralement comprise entre 1,5 nF (un virgule cinq nanofarad) et 3 nF (trois nanofarad).

Cette valeur sera notamment le résultat d'un compromis entre des contraintes structurelles liées au dimensionnement et à l'implantation des troisième et quatrième électrode 15, 16, la nécessité d'avoir une capacité à vide bien adaptée au calibre de l'appareil de mesure d'impédance, et la nécessité d'avoir une capacité à vide qui permette d'observer, sous une faible tension d'excitation, un courant dont l'intensité soit suffisamment élevée pour être peu sensible au bruit ou aux courants de fuite parasites.

L'écart Delta_C choisi, dont la valeur est inférieure strictement à la capacité prévisible du premier condensateur C1, sera quant à lui de préférence compris entre 30 pF (trente picofarad) et 150 pF (cent cinquante picofarad), plus préférentiellement entre 50 pF (cinquante picofarad) et 100 pF (cent picofarad).

Cet écart sera notamment choisi suffisamment élevé ne pas pouvoir être confondu avec un phénomène parasite, car cela risquerait sinon de causer des faux positifs, et suffisamment bas pour permettre une détection effective et relativement rapide.

Selon une caractéristique structurelle préférentielle qui peut constituer une invention à part entière, la première électrode 11 et la troisième électrode 15 sont formées par une même pièce conductrice 21 commune, de préférence métallique, dite « première pièce conductrice », qui forme simultanément la première armature C1_1 du premier condensateur C1 et la première armature C2_1 du second condensateur C2.

Un tel agencement présente l'avantage d'une part d'être compact et simple, notamment car il permet d'intégrer les première et troisième électrodes 11, 15 dans le support 20, et d'autre part de procurer un fonctionnement fiable du circuit de détection 13, grâce notamment à l'étendue de la première pièce conductrice 21 et au maintien stable de celle-ci contre l'objet 2.

Ladite première pièce conductrice 21 pourra prendre la forme d'une plaque ou d'une palette en matériau électriquement conducteur, par exemple en acier.

De préférence, ladite première pièce conductrice 21 sera intégrée au support 20, et sa forme épousera de préférence sensiblement la forme de l'objet 2, et plus particulièrement la forme de la surface de l'objet 2, contre laquelle le support 20 est destiné à venir en appui.

Ainsi, la première pièce conductrice 21 peut être formée par une palette incurvée intégrée à un mors qui vient s'inscrire dans la courbure que forme le premier et/ou le second talon 31A, 31B autour de l'axe central X30, et donc qui vient s'inscrire dans la courbure de la tringle du bandage 30.

De préférence, le support 20, et plus particulièrement le mors concerné, et notamment la première pièce conductrice 21, s'étend axialement sur une distance au moins égale à celle qui sépare le premier talon 31A du second talon 31B, de sorte à soutenir simultanément les deux talons 31A, 31B, tel que cela est visible sur la figure 2.

Avantageusement, la première pièce conductrice 21 matérialisera le nœud N1 d'où bifurquent la première branche B1 et la seconde branche B2 du circuit de détection 13.

Par ailleurs, tel que cela est visible sur la figure 3, la face d'appui 20A du support 20, et donc plus particulièrement la face correspondante de la première pièce conductrice 21, ici la face radialement externe de la première pièce conductrice 21, pourra être pourvue de stries 24 pour présenter une meilleure accroche sur l'objet 2.

Selon une possibilité de mise en œuvre, il est possible d'appliquer directement contre l'objet 2 une face d'appui 20A nue, électriquement conductrice, à condition bien sûr que cette face d'appui 20A ne soit pas reliée à la masse, afin d'éviter de mettre le nœud N1 à la masse, car cela aurait sinon pour effet de mettre les deux bornes du premier dipôle D1 et/ou les deux bornes du second dipôle D2 simultanément à la masse et ainsi d'empêcher une mesure d'impédance entre ces bornes.

En particulier, on pourra alors utiliser une première pièce conductrice 21, de préférence métallique, dont la face externe est nue et forme directement la face d'appui 20A contre laquelle l'objet 2, ici le talon 31 du bandage 30, vient s'appuyer.

Ceci sera notamment possible lorsque la structure de l'objet 2 garantit l'absence de court-circuit franc, et donc l'existence effective d'une impédance véritablement mesurable, entre l'insert 4 et la zone de l'objet 2 contre laquelle la première électrode 11, ici la face d'appui 20A électriquement conductrice du support 20, vient en appui. C'est par exemple le cas dans la situation d'un bandage 30 qui possède au moins une couche électriquement isolante à base de caoutchouc, notamment les bourrelets de caoutchouc entourant les tringles 32A, 32B, qui s'interpose entre la première électrode 11 et les câbles de la nappe de renfort 36, 37, 38 formant les inserts 4 électriquement conducteurs.

Cependant, en variante, on pourrait toutefois prévoir de revêtir la face d'appui 20A, et donc en particulier la face externe de la première pièce conductrice 21, d'une couche de matériau électriquement isolant, afin d'éviter de créer un contact électrique direct, et donc un court-circuit, entre la première pièce conductrice 21, et donc la première électrode 11, et l'insert 4 électriquement conducteur, dans l'éventualité où le revêtement 3 électriquement isolant serait absent ou dégradé dans la zone où le support 20 vient prendre appui contre l'objet 2.

C'est pourquoi, selon une autre possibilité de mise en œuvre, la face d'appui 20A du support 20, et donc ici la face radialement externe de la première pièce conductrice 21, est recouverte d'une couche de protection électriquement isolante.

Cette couche de protection, ici radialement externe, évitera tout court-circuit entre la première électrode 11 et l'insert 4 électriquement conducteur, et pourra avantageusement contribuer à former au moins une partie du diélectrique du premier condensateur C1.

Selon une caractéristique préférentielle qui peut constituer une invention à part entière, et tel que cela est visible sur la figure 3, le support 20 mentionné plus haut, et auquel est intégré la première électrode 11, présente une structure stratifiée qui comprend la première pièce conductrice 21 commune formant la première électrode 11 et la troisième électrode 15, une couche électriquement isolante 22 qui recouvre ladite première pièce conductrice 21 du côté de ladite première pièce conductrice 21 qui est opposé à la face d'appui 20A, ici donc la face radialement interne de la première pièce conductrice 21, de sorte à former le diélectrique du second condensateur C2, et une seconde pièce conductrice 23 qui recouvre ladite couche électriquement isolante 22 pour former la quatrième électrode 16, et donc la seconde armature C2_2 du second condensateur C2.

Ici encore, un tel agencement permet d'avoir une structure simple, compacte, fiable et robuste, qui forme à elle seule la seconde branche B2 et une partie de la première branche B1, et qui combine les fonctions mécaniques de support avec les fonctions électriques de détection.

La seconde pièce conductrice 23 peut être formée par une plaque ou une palette en matériau électriquement conducteur, par exemple métallique, au besoin incurvée pour épouser la forme de l'objet 2 à soutenir.

Dans le cas où le support 20 est formé par un mors destiné à soutenir le talon 31A, 31B d'un bandage 30 de forme annulaire, et donc d'épouser la courbure de la tringle circulaire qui renforce ledit talon 31, la seconde pièce conductrice 23 pourra être formée par une palette, de préférence incurvée de façon concave par rapport à l'axe central X30, palette qui sera située en position radialement interne par rapport à l'axe central X30, et sur laquelle se superposeront en épaisseur, dans cet ordre, par distance croissante à l'axe central X30, la couche électriquement isolante 22 puis la première pièce conductrice 21 qui prendra la forme d'une palette, de préférence incurvée, offrant radialement vers l'extérieur une face d'appui 20A, de préférence concave par rapport à l'axe central X30, adaptée pour recevoir le talon 31A, 31B.

La structure stratifiée pourra être maintenue au moyen d'une ou plusieurs vis 25.

Lesdites vis 25 pourront avantageusement être isolées de la seconde pièce conductrice 23 au moyen de rondelles isolantes 26, afin d'éviter de court-circuiter le second condensateur C2, tel que cela est visible sur la figure 3.

De préférence, lesdites vis 25 seront d'une part au contact de la première pièce conductrice 21, et d'autre part isolées de la seconde pièce conductrice 23, et traverseront la structure stratifiée, de sorte à pouvoir être connectées à un fil raccordé à l'unité de contrôle 14, et plus particulièrement au générateur 17. Ainsi, on pourra facilement alimenter la première électrode 11 formée par la première pièce conductrice 21 et mesurer l'intensité du courant arrivant au nœud N1.

De préférence, le dispositif 1 comprend un système de déplacement motorisé 40, placé sous la dépendance de l'unité de contrôle 14, qui permet alternativement d'amener l'outil 5 d'enlèvement de matière au contact de l'objet 2 puis d'éloigner l'outil 5 d'enlèvement de matière de l'objet 2.

Le système de déplacement motorisé 40 peut à cet effet comprendre un bras robotisé 41, par exemple un bras robotisé anthropomorphe à six axes, dont l'extrémité porte l'outil 5 d'enlèvement de matière.

Selon une possibilité de mise en œuvre, l'objet sera maintenu par le support 20 en position fixe par rapport au bâti du dispositif 1, et c'est donc le système de déplacement motorisé 40 qui positionnera et déplacera l'outil 5 relativement au support 20 et à l'objet 2 pour réaliser la ou les opérations d'enlèvement de matière en une ou plusieurs zones identifiées sur l'objet 2.

Bien entendu, sans sortir du cadre de l'invention, le système de déplacement motorisé 40 pourrait comporter à l'inverse un porte-outil fixe et un support 20 mobile agencé pour déplacer l'objet 2, ici le bandage 30, par rapport à l'outil 5 d'enlèvement de matière, ou encore une combinaison d'un porte-outil mobile, de type bras robotisé, permettant de déplacer l'outil 5 dans l'espace, par rapport au bâti du dispositif 1 et un support 20 mobile permettant de déplacer et positionner l'objet 2 dans l'espace, par rapport à ce même bâti du dispositif 1.

Selon une possibilité de réalisation, le système de déplacement 40 motorisé comprend un capteur d'effort qui permet de mesurer un effort de réaction qu'exerce l'objet 2 à l'encontre de l'outil 5 d'enlèvement de matière.

Ledit capteur d'effort permet avantageusement au système de déplacement 40 motorisé d'effectuer, à la manière d'un palpeur, une prise d'origine préalable à l'opération d'enlèvement de matière, en rapprochant l'outil 5 de l'objet 2, tandis que l'outil 5 est inactif, par exemple tandis que la brosse n'est pas entraînée en rotation, jusqu'à ce que le capteur d'effort détecte que ledit outil 5 est entré en contact avec l'objet 2, ce qui indiquera au système de déplacement motorisé 40, et donc à l'unité de contrôle 14, quelle est la position de la surface de l'objet 2 dans l'espace.

Ledit capteur d'effort peut également fournir une sécurité, redondante avec le système de détection 10 par mesure d'impédance, en ceci que ledit capteur d'effort est capable de détecter l'effort de réaction mécanique que lui oppose l'insert 4 électriquement conducteur, lorsque l'outil 5 atteint ledit insert 4, ou une variation dans l'évolution de l'effort de résistance qui s'oppose à la pénétration de l'outil 5 dans l'objet 2, par exemple le couple résistant qui s'oppose à la rotation de la brosse, entre la situation où l'outil 5 s'enfonce progressivement dans le revêtement 3 qui précède l'insert 4, ici la couche de gomme qui précède un câble métallique de renfort, et la situation où l'outil atteint l'insert 4, ici atteint ledit câble métallique de renfort.

Bien que le temps de réponse de cette détection par capteur d'effort soit plus long que le temps de réponse particulièrement court du système de détection 10 électrique par mesure d'impédance, lequel est typiquement inférieur à 30 millisecondes, cette détection mécanique offre néanmoins une sécurité supplémentaire, qui permet d'éviter de trop endommager l'insert 4, ou de causer des dégâts à l'outil 5 d'enlèvement de matière, en cas de défaillance du système de détection 10 capacitif.

De même, pour accroître la sécurité de fonctionnement, on pourrait prévoir, lorsque l'outil 5 est formé par une brosse rotative, un capteur de couple qui soit à même détecter une variation du couple d'enlèvement de matière lorsque la brosse rencontre l'insert 4, après avoir creusé le revêtement 3 électriquement isolant.

L'invention porte bien entendu également sur un procédé de détection permettant de détecter une entrée en contact d'un outil 5 d'enlèvement de matière avec un insert 4 électriquement conducteur présent dans un objet 2, lors d'une opération d'enlèvement de matière au cours de laquelle on retire dudit objet 2, au moyen dudit outil 5 d'enlèvement de matière, au moins une partie d'un revêtement 3 électriquement isolant qui recouvre ledit au moins un insert 4électriquement conducteur. Ce procédé de détection peut bien entendu se décliner selon l'une quelconque des formes décrites dans ce qui précède.

Selon ledit procédé de détection :
- on place une première électrode 11 en vis-à-vis de l'objet 2, de préférence au contact dudit objet 2, à distance de l'insert 4 électriquement conducteur, de sorte à former avec ledit insert 4 électriquement conducteur un premier dipôle D1 dont une première borne D1_1 est formée par la première électrode 11 et une seconde borne D1_2 est formée par l'insert 4 électriquement conducteur,
- on associe une seconde électrode 12 à l'outil 5 d'enlèvement de matière de telle manière que lorsque l'outil 5 d'enlèvement de matière entre en contact avec l'insert 4 électriquement conducteur, une connexion électrique s'établit entre ladite seconde électrode 12 et ledit insert 4 électriquement conducteur formant la seconde borne D1_2 du premier dipôle D1,
- on détecte une variation d'impédance, de préférence une variation d'impédance capacitive, d'un circuit de détection 13 contenant le premier dipôle D1 causée par la connexion électrique du premier dipôle D1 avec la seconde électrode 12 lorsque l'outil 5 d'enlèvement de matière entre en contact avec l'insert 4 électriquement conducteur.

De préférence, selon ce procédé de détection, on place la première électrode 11 en vis-à-vis de l'objet 2, de préférence au contact dudit objet 2, à distance de l'insert 4 électriquement conducteur, de sorte à former avec ledit insert 4 électriquement conducteur un condensateur C1 dit « premier condensateur » C1 dont une première armature C1_1 est formée par la première électrode 11 correspondant à la première borne D1_1 du premier dipôle D1 et une seconde armature C1_2 est formée par l'insert 4 électriquement conducteur correspondant à la seconde borne D1_2 du premier dipôle D1, et l'on prévoit un second condensateur C2 distinct du premier condensateur C1 et dont la première armature C2_1 est raccordée électriquement à la première armature C1_1 du premier condensateur C1 de sorte à former un nœud N1 qui est commun au premier condensateur C1 et au second condensateur C2, et l'on mesure l'impédance aux bornes du second condensateur C2 afin de détecter une variation d'impédance, ici plus préférentiellement une variation d'impédance capacitive, provoquée par la connexion électrique du premier condensateur C1 avec la seconde électrode 12 lors de l'entrée en contact de l'outil 5 d'enlèvement de matière avec l'insert 4 électriquement conducteur.

De préférence, la seconde électrode 12 d'une part, qui vient se connecter à la second borne D1_2 du premier dipôle, ici de préférence à la seconde armature C1_2 du premier condensateur C1, lorsque l'outil 5 d'enlèvement de matière vient au contact de l'insert 4 électriquement conducteur, et la seconde armature C2_2 du second condensateur C2 d'autre part, sont raccordées électriquement à une ligne conductrice L1 commune de sorte à être placées à un même potentiel, de préférence à une ligne conductrice L1 commune formant une masse reliée à la terre.

De préférence, comme indiqué plus haut, on applique aux bornes du second condensateur C2 une tension alternative de fréquence égale ou supérieure à 10 kHz, de préférence égale ou supérieure à 100kHz, de préférence comprise entre 100 kHz et 800kHz, par exemple comprise entre 200 kHz et 500 kHz, et l'on mesure l'intensité du courant électrique arrivant au nœud N1 commun au premier condensateur C1 et au second condensateur C2 afin de déterminer l'impédance aux bornes du second condensateur C2.

L'invention porte enfin plus particulièrement sur un procédé de traitement d'un bandage 30, tel qu'un bandage pneumatique, qui comprend au moins une couche de gomme formant un revêtement 3 électriquement isolant et au moins une nappe de renfort 36, 37, 38 comprenant des câbles de renfort métalliques formant des inserts 4 électriquement conducteurs, ledit procédé de traitement comprenant au moins une étape de creusage au cours duquel on enlève au moins une partie de la gomme recouvrant les câbles de renfort au moyen d'un outil 5 d'enlèvement de matière, tel qu'une brosse métallique ou une râpe, ledit procédé de traitement étant caractérisé en ce qu'il met en œuvre un procédé de détection selon l'invention pour détecter une entrée en contact de l'outil 5 d'enlèvement de matière avec un ou des câbles de renfort.

En d'autres termes, l'invention peut avantageusement trouver application dans la réparation de carcasses de bandage 30 en vue du rechapage desdits bandages, et plus globalement dans toute forme de recyclage de tout ou partie de bandages 30 impliquant une opération d'enlèvement de gomme.

Ceci étant, on notera que, plus globalement, l'invention peut avantageusement trouver application dans la réparation ou le recyclage de tout objet 2 présentant une structure comprenant une armature conductrice, de préférence formée par un ou plusieurs câbles métalliques de renfort, noyée dans une matrice isolante, typiquement une matrice à base de caoutchouc, dont on souhaite enlever tout ou partie ; un tel objet 2 peut être par exemple une chenille destinée à la propulsion d'un véhicule, une bande transporteuse, une courroie, un joint d'étanchéité, etc.

De préférence, la première électrode 11 sera fixée à proximité de, et plus préférentiellement contre, un talon 31A, 31B du bandage 30, tandis que l'outil 5 d'enlèvement de matière, qu'il soit manœuvré manuellement par un opérateur ou, préférentiellement, de façon automatique par un système de déplacement motorisé 40 automatique, sera utilisé pour grignoter, par coupe ou par abrasion, la couche de gomme constitutive de la bande de roulement 34 recouvrant le sommet 33 du bandage 30 ou la couche de gomme recouvrant un flanc 35A, 35B dudit bandage 30.

Selon une possibilité d'application du procédé de détection selon l'invention, qui peut constituer une invention à part entière applicable à tout objet 2 présentant une structure appropriée, et notamment applicable dans le cadre d'un procédé susmentionné de traitement d'un bandage 30, l'objet 2, et plus particulièrement ici le bandage 30, comprend une pluralité de nappes de renfort 36, 37, 38 différentes possédant des structures de câbles de renfort propres à chacune, lesdits câbles de renfort formant des inserts 4 électriquement conducteurs, et le procédé de détection est apte à distinguer, à partir de la variation d'impédance constatée lorsque l'outil 5 d'enlèvement de matière entre en contact avec l'un ou plusieurs câbles de renforts de l'une desdites nappes de renfort 36, 37, 38, avec quelle structure de câbles de renfort, et donc avec quelle nappe de renfort 36, 37, 38, parmi la pluralité de nappes de renfort présentes, ledit outil 5 d'enlèvement de matière est entré en contact.

A cet effet, on pourra identifier, par exemple par une campagne d'échantillonnage réalisée sur un ou plusieurs objets 2, ici un ou plusieurs bandages 30, une pluralité de seuils d'alerte Z_thresh, C_thresh de valeurs différentes, formant plusieurs paliers, et qui correspondent chacun à une structure particulière de nappe de renfort 36, 37, 38. Ces valeurs pourront par exemple être stockées dans une mémoire non volatile de l'unité de contrôle 14, sous forme de tableau, de bibliothèque, de cartographie, d'abaque, etc.

La valeur de l'impédance, et plus particulièrement de l'impédance capacitive, qui sera mesurée par l'unité de contrôle 14 lorsque l'outil 5 entre au contact de câbles de renfort formant insert 4 pourra alors être comparée à ces seuils d'alerte Z_thresh, C_thresh, afin de déterminer de quel seuil franchi ladite valeur d'impédance mesurée est la plus proche, et donc à quelle structure de nappe de renfort appartiennent les câbles ainsi touchés par l'outil 5.

Avantageusement, on pourra donc utiliser le procédé de détection selon l'invention pour identifier le type de nappe de renfort avec lequel l'outil 5 est entré en contact.

Ceci pourra notamment permettre d'adapter le processus d'enlèvement de matière, par exemple en repositionnant l'outil 5 par rapport à l'objet 2, ici par rapport au bandage 30, ou bien en adaptant la vitesse du mouvement de coupe en fonction de la zone de l'objet 2, ici du bandage 30, qui fait l'objet de l'enlèvement de matière.

## Revendications

1. Dispositif (1) d'enlèvement de matière destiné à travailler un objet (2), tel qu'un bandage pneumatique, comprenant un revêtement (3) électriquement isolant qui recouvre au moins un insert (4) électriquement conducteur, ledit dispositif comprenant au moins un outil (5) d'enlèvement de matière qui est agencé de manière à pouvoir enlever du revêtement (3) électriquement isolant de l'objet (2), ledit dispositif étant **caractérisé en ce qu'**il comprend un système de détection (10) permettant de détecter, par une mesure d'impédance, une entrée en contact de l'outil (5) d'enlèvement de matière avec l'insert (4) électriquement conducteur, ledit système de détection (10) comprenant :
- une première électrode (11) qui est agencée pour venir se placer en vis-à-vis de l'objet (2), à distance de l'insert (4) électriquement conducteur, de sorte à former avec ledit insert (4) électriquement conducteur un dipôle (D1), dit « premier dipôle » (D1), dont une première borne (D1_1) est formée par la première électrode (11) et une seconde borne (D1_2) est formée par l'insert (4) électriquement conducteur,
- une seconde électrode (12) qui est associée à l'outil (5) d'enlèvement de matière de telle manière que lorsque l'outil (5) d'enlèvement de matière entre en contact avec l'insert (4) électriquement conducteur, une connexion électrique s'établit entre ladite seconde électrode (12) et ledit insert (4) électriquement conducteur formant la seconde borne (D1_2) du premier dipôle (D1),
- une unité de contrôle (14) qui est agencée pour mesurer une impédance d'un circuit de détection (13) contenant le premier dipôle (D1) et pour détecter une variation d'impédance dudit circuit de détection (13) causée par la connexion électrique du premier dipôle (D1) avec la seconde électrode (12) provoquée par l'entrée en contact de l'outil (5) d'enlèvement de matière avec l'insert (4) électriquement conducteur.

2. Dispositif selon la revendication 1 **caractérisé en ce que** le système de détection (10) est un système de détection (10) capacitif au sein duquel :
- la première électrode (11) est agencée pour venir se placer en vis-à-vis de l'objet (2), à distance de l'insert (4) électriquement conducteur, de sorte à former avec ledit insert (4) électriquement conducteur un condensateur (C1) dit « premier condensateur » (C1) dont une première armature (C1_1) est formée par la première électrode (11), correspondant à la première borne (D1_1) du premier dipôle (D1), et une seconde armature (C1_2) est formée par l'insert (4) électriquement conducteur, correspondant à la seconde borne (D1_2) du premier dipôle (D1),
- et l'unité de contrôle (14) est agencée pour détecter une variation d'impédance du circuit de détection (13) causée par la connexion électrique du premier condensateur (C1) avec la seconde électrode (12) provoquée par l'entrée en contact de l'outil (5) d'enlèvement de matière avec l'insert (4) électriquement conducteur qui forme la seconde armature (C1_2) du premier condensateur (C1).

3. Dispositif selon la revendication 1 ou 2 **caractérisé en ce que** le circuit de détection (13) comprend un second dipôle (D2) qui est distinct du premier dipôle (D1), lequel second dipôle (D2) présente une première borne (D2_1) qui est raccordée électriquement à la première borne (D1_1) du premier dipôle (D1) de sorte à former un nœud (N1) qui est commun au premier dipôle (D1) et au second dipôle (D2), **en ce que** l'unité de contrôle (14) mesure l'impédance aux bornes (D2_1, D2_2) du second dipôle (D2) afin de pouvoir d'une part acquérir une valeur d'impédance de référence (Z2_ref, C2_ref), dite « impédance à vide » (Z2_ref, C2_ref), qui est égale à une valeur d'impédance que ladite unité de contrôle (14) mesure aux bornes du second dipôle (D2) tandis que l'outil (5) d'enlèvement de matière se trouve à distance de l'insert (4) électriquement conducteur, et d'autre part détecter, par rapport à cette impédance à vide (Z2_ref, C2_ref), une variation d'impédance, de préférence une variation d'impédance capacitive, qui est représentative d'une connexion électrique du premier dipôle (D1) avec la seconde électrode (12) lors de l'entrée en contact de l'outil (5) d'enlèvement de matière avec l'insert (4) électriquement conducteur.

4. Dispositif selon la revendication 3 **caractérisé en ce que** le système de détection (10) comprend une troisième électrode (15) qui correspond à la première borne (D2_1) du second dipôle (D2) et qui forme une première armature (C2_1) d'un condensateur (C2) dit « second condensateur » (C2), distinct du premier dipôle (D1), et une quatrième électrode (16) qui correspond à la seconde borne (D2_2) du second dipôle (D2) et qui forme une seconde armature (C2_2) dudit second condensateur (C2).

5. Dispositif selon les revendications 2 et 4 **caractérisé en ce que** la première électrode (11) et la troisième électrode (15) sont formées par une même pièce conductrice (21) commune, dite « première pièce conductrice », de préférence métallique, qui forme simultanément la première armature (C1_1) du premier condensateur (C1) et la première armature (C2_1) du second condensateur (C2).

6. Dispositif selon l'une des revendications 3, 4 ou 5 **caractérisé en ce que** la seconde borne (D1_2) du premier dipôle (D1) et la seconde borne (D2_2) du second dipôle (D2) sont toutes les deux raccordées électriquement à une ligne conductrice commune (L1), qui appartient de préférence à la masse du dispositif (1), de sorte à que lesdites seconde borne (D1_2) du premier dipôle (D1) et seconde borne (D2_2) du second dipôle (D2) se trouvent à un même potentiel.

7. Dispositif selon l'une des revendications précédentes **caractérisé en ce que** l'unité de contrôle (14) applique au circuit de détection (13) un signal d'excitation alternatif dont la fréquence est supérieure ou égale à 10 kHz, de préférence supérieure ou égale à 100 kHz.

8. Dispositif selon l'une des revendications précédentes **caractérisé en ce que** la première électrode (11) est intégrée au sein d'un support (20), tel qu'un mors, qui présente une face d'appui (20A) qui est destinée à venir au contact de l'objet (2) afin de maintenir ledit objet (2) pendant que celui-ci est soumis à l'action de l'outil (5) d'enlèvement de matière.

9. Dispositif selon la revendication 8 **caractérisé en ce que** la face d'appui (20A) du support (20) est recouverte d'une couche de protection électriquement isolante.

10. Dispositif selon la revendication 5 et l'une des revendications 8 ou 9 **caractérisé en ce que** le support (20) présente une structure stratifiée qui comprend la première pièce conductrice (21) commune formant la première électrode (11) et la troisième électrode (15), une couche électriquement isolante (22) qui recouvre ladite première pièce conductrice (21) du côté de ladite première pièce conductrice qui est opposé à la face d'appui (20A), de sorte à former le diélectrique du second condensateur (C2), et une seconde pièce conductrice (23) qui recouvre ladite couche électriquement isolante (22) pour former la quatrième électrode (16), et donc la seconde armature (C2_2) du second condensateur (C2).

11. Procédé de détection permettant de détecter une entrée en contact d'un outil (5) d'enlèvement de matière avec un insert (4) électriquement conducteur présent dans un objet (2), lors d'une opération d'enlèvement de matière au cours de laquelle on retire dudit objet (2), au moyen dudit outil (5) d'enlèvement de matière, au moins une partie d'un revêtement (3) électriquement isolant qui recouvre ledit au moins un insert (4) électriquement conducteur, ledit procédé de détection étant **caractérisé en ce que** :
- on place une première électrode (11) en vis-à-vis de l'objet (2), de préférence au contact dudit objet (2), à distance de l'insert (4) électriquement conducteur, de sorte à former avec ledit insert (4) électriquement conducteur un premier dipôle (D1) dont une première borne (D1_1) est formée par la première électrode (11) et une seconde borne (D1_2) est formée par l'insert (4) électriquement conducteur,
- on associe une seconde électrode (12) à l'outil (5) d'enlèvement de matière de telle manière que lorsque l'outil (5) d'enlèvement de matière entre en contact avec l'insert (4) électriquement conducteur, une connexion électrique s'établit entre ladite seconde électrode (12) et ledit insert (4) électriquement conducteur formant la seconde borne (D1_2) du premier dipôle (D1),
- on détecte une variation d'impédance d'un circuit de détection (13) contenant le premier dipôle (D1) causée par la connexion électrique du premier dipôle (D1) avec la seconde électrode (12) lorsque l'outil (5) d'enlèvement de matière entre en contact avec l'insert (4) électriquement conducteur.

12. Procédé selon la revendication 11 **caractérisé en ce que** l'on place la première électrode (11) en vis-à-vis de l'objet (2), de préférence au contact dudit objet (2), à distance de l'insert (4) électriquement conducteur, de sorte à former avec ledit insert (4) électriquement conducteur un condensateur (C1) dit « premier condensateur » (C1) dont une première armature (C1_1) est formée par la première électrode (11) correspondant à la première borne (D1_1) du premier dipôle (D1) et une seconde armature (C1_2) est formée par l'insert (4) électriquement conducteur correspondant à la seconde borne (D1_2) du premier dipôle (D1), et l'on prévoit un second condensateur (C2) distinct du premier condensateur (C1) et dont la première armature (C2_1) est raccordée électriquement à la première armature (C1_1) du premier condensateur (C1) de sorte à former un nœud (N1) qui est commun au premier condensateur (C1) et au second condensateur (C2), et l'on mesure l'impédance aux bornes du second condensateur (C2) afin de détecter une variation d'impédance, de préférence une variation d'impédance capacitive, provoquée par la connexion électrique du premier condensateur (C1) avec la seconde électrode (12) lors de l'entrée en contact de l'outil (5) d'enlèvement de matière avec l'insert (4) électriquement conducteur.

13. Procédé selon la revendication 11 ou 12 **caractérisé en ce que** l'objet (2) comprend une pluralité de nappes de renfort (36, 37, 38) différentes possédant des structures de câbles de renfort propres à chacune, lesdits câbles de renfort formant des inserts (4) électriquement conducteurs, et **en ce que** ledit procédé de détection est apte à distinguer, à partir de la variation d'impédance constatée lorsque l'outil (5) d'enlèvement de matière entre en contact avec l'un ou plusieurs câbles de renfort de l'une desdites nappes de renfort (36, 37, 38), avec quelle structure de câbles de renfort, et donc avec quelle nappe de renfort (36, 37, 38), parmi la pluralité de nappes de renfort présentes, ledit outil (5) d'enlèvement de matière est entré en contact.

14. Procédé de traitement d'un bandage (30), tel qu'un bandage pneumatique, qui comprend au moins une couche de gomme formant un revêtement (3) électriquement isolant et au moins une nappe de renfort (36, 37, 38) comprenant des câbles de renfort métalliques formant des inserts (4) électriquement conducteurs, ledit procédé de traitement comprenant au moins une étape de creusage au cours duquel on enlève au moins une partie de la gomme recouvrant les câbles de renfort au moyen d'un outil (5) d'enlèvement de matière, tel qu'une brosse métallique ou une râpe, ledit procédé de traitement étant **caractérisé en ce qu'**il met en œuvre un procédé de détection selon l'une des revendications 11 à 13 pour détecter une entrée en contact de l'outil (5) d'enlèvement de matière avec un ou des câbles de renfort.

## Patentansprüche

1. Vorrichtung (1) zum Abtragen von Material, die dazu bestimmt ist, einen Gegenstand (2) wie etwa einen Luftreifen zu bearbeiten, der eine elektrisch isolierende Beschichtung (3) umfasst, die mindestens einen elektrisch leitfähigen Einsatz (4) bedeckt, wobei die Vorrichtung mindestens ein Materialabtragungswerkzeug (5) umfasst, das so ausgebildet ist, dass es elektrisch isolierende Beschichtung (3) von dem Gegenstand (2) abtragen kann, wobei die Vorrichtung **dadurch gekennzeichnet ist, dass** sie ein Detektionssystem (10) umfasst, das es ermöglicht, durch eine Impedanzmessung ein Inkontakttreten des Materialabtragungswerkzeugs (5) mit dem elektrisch leitfähigen Einsatz (4) zu detektieren, das Detektionssystem (10) umfassend:
- eine erste Elektrode (11), die dazu ausgebildet ist, gegenüber dem Gegenstand (2) in einem Abstand von dem elektrisch leitfähigen Einsatz (4) angeordnet zu werden, so dass mit dem elektrisch leitfähigen Einsatz (4) ein Zweipol (D1), "erster Zweipol" (D1) genannt, gebildet wird, bei dem ein erster Anschluss (D1_1) durch die erste Elektrode (11) gebildet wird und ein zweiter Anschluss (D1_2) durch den elektrisch leitfähigen Einsatz (4) gebildet wird,
- eine zweite Elektrode (12), die dem Materialabtragungswerkzeug (5) so zugeordnet ist, dass, wenn das Materialabtragungswerkzeug (5) mit dem elektrisch leitfähigen Einsatz (4) in Kontakt tritt, eine elektrische Verbindung zwischen der zweiten Elektrode (12) und dem elektrisch leitfähigen Einsatz (4), der den zweiten Anschluss (D1_2) des ersten Zweipols (D1) bildet, hergestellt wird,
- eine Steuereinheit (14), die dazu ausgebildet ist, eine Impedanz einer Detektionsschaltung (13), die den ersten Zweipol (D1) enthält, zu messen und eine Impedanzänderung der Detektionsschaltung (13) zu detektieren, die durch die elektrische Verbindung des ersten Zweipols (D1) mit der zweiten Elektrode (12) verursacht wird, die durch das Inkontakttreten des Materialabtragungswerkzeugs (5) mit dem elektrisch leitfähigen Einsatz (4) bewirkt wird.

2. Vorrichtung nach Anspruch 1, **dadurch gekennzeichnet, dass** das Detektionssystem (10) ein kapazitives Detektionssystem (10) ist, in dem:
- die erste Elektrode (11) dazu ausgebildet ist, gegenüber dem Gegenstand (2) in einem Abstand von dem elektrisch leitfähigen Einsatz (4) angeordnet zu werden, so dass mit dem elektrisch leitfähigen Einsatz (4) ein Kondensator (C1), "erster Kondensator" (C1) genannt, gebildet wird, bei dem ein erster Belag (C1_1) durch die erste Elektrode (11) gebildet wird, entsprechend dem ersten Anschluss (D1_1) des ersten Zweipols (D1), und ein zweiter Belag (C1_2) durch den elektrisch leitfähigen Einsatz (4) gebildet wird, entsprechend dem zweiten Anschluss (D1_2) des ersten Zweipols (D1),
- und die Steuereinheit (14) dazu ausgebildet ist, eine Impedanzänderung der Detektionsschaltung (13) zu detektieren, die durch die elektrische Verbindung des ersten Kondensators (C1) mit der zweiten Elektrode (12) verursacht wird, die durch das Inkontakttreten des Materialabtragungswerkzeugs (5) mit dem elektrisch leitfähigen Einsatz (4) bewirkt wird, der den zweiten Belag (C1_2) des ersten Kondensators (C1) bildet.

3. Vorrichtung nach Anspruch 1 oder 2, **dadurch gekennzeichnet, dass** die Detektionsschaltung (13) einen zweiten Zweipol (D2) umfasst, der von dem ersten Zweipol (D1) verschieden ist, wobei der zweite Zweipol (D2) einen ersten Anschluss (D2_1) aufweist, der elektrisch mit dem ersten Anschluss (D1_1) des ersten Zweipols (D1) verbunden ist, so dass ein Knoten (N1) gebildet wird, der dem ersten Zweipol (D1) und dem zweiten Zweipol (D2) gemeinsam ist, dass die Steuereinheit (14) die Impedanz an den Anschlüssen (D2_1, D2_2) des zweiten Zweipols (D2) misst, um einerseits einen Referenzimpedanzwert (Z2_ref, C2_ref), "Leerlaufimpedanz" (Z2_ref, C2_ref) genannt, erfassen zu können, der gleich einem Impedanzwert ist, den die Steuereinheit (14) an den Anschlüssen des zweiten Zweipols (D2) misst, während sich das Materialabtragungswerkzeug (5) in einem Abstand von dem elektrisch leitfähigen Einsatz (4) befindet, und andererseits in Bezug auf diese Leerlaufimpedanz (Z2_ref, C2_ref) eine Impedanzänderung, vorzugsweise eine kapazitive Impedanzänderung, zu detektieren, die für eine elektrische Verbindung des ersten Zweipols (D1) mit der zweiten Elektrode (12) bei dem Inkontakttreten des Materialabtragungswerkzeugs (5) mit dem elektrisch leitfähigen Einsatz (4) repräsentativ ist.

4. Vorrichtung nach Anspruch 3, **dadurch gekennzeichnet, dass** das Detektionssystem (10) eine dritte Elektrode (15) umfasst, die dem ersten Anschluss (D2_1) des zweiten Zweipols (D2) entspricht und die einen ersten Belag (C2_1) eines Kondensators (C2), "zweiter Kondensator" (C2) genannt, bildet, der von dem ersten Zweipol (D1) verschieden ist, und eine vierte Elektrode (16), die dem zweiten Anschluss (D2_2) des zweiten Zweipols (D2) entspricht und die einen zweiten Belag (C2_2) des zweiten Kondensators (C2) bildet.

5. Vorrichtung nach den Ansprüchen 2 und 4, **dadurch gekennzeichnet, dass** die erste Elektrode (11) und die dritte Elektrode (15) durch ein selbes gemeinsames leitfähiges Teil (21), "erstes leitfähiges Teil" genannt, vorzugsweise metallisch, gebildet werden, das gleichzeitig den ersten Belag (C1_1) des ersten Kondensators (C1) und den ersten Belag (C2_1) des zweiten Kondensators (C2) bildet.

6. Vorrichtung nach einem der Ansprüche 3, 4 oder 5, **dadurch gekennzeichnet, dass** der zweite Anschluss (D1_2) des ersten Zweipols (D1) und der zweite Anschluss (D2_2) des zweiten Zweipols (D2) beide elektrisch mit einer gemeinsamen leitfähigen Leitung (L1) verbunden sind, die vorzugsweise zu der Masse der Vorrichtung (1) gehört, so dass der zweite Anschluss (D1_2) des ersten Zweipols (D1) und der zweite Anschluss (D2_2) des zweiten Zweipols (D2) an einem gleichen Potential liegen.

7. Vorrichtung nach einem der vorhergehenden Ansprüche, **dadurch gekennzeichnet, dass** die Steuereinheit (14) an die Detektionsschaltung (13) ein alternierendes Anregungssignal anlegt, dessen Frequenz größer oder gleich 10 kHz, vorzugsweise größer oder gleich 100 kHz ist.

8. Vorrichtung nach einem der vorhergehenden Ansprüche, **dadurch gekennzeichnet, dass** die erste Elektrode (11) in einen Träger (20) wie etwa eine Backe integriert ist, die eine Anlagefläche (20A) aufweist, die dazu bestimmt ist, mit dem Gegenstand (2) in Kontakt zu gelangen, um den Gegenstand (2) zu halten, während dieser der Einwirkung des Materialabtragungswerkzeugs (5) unterzogen wird.

9. Vorrichtung nach Anspruch 8, **dadurch gekennzeichnet, dass** die Anlagefläche (20A) des Trägers (20) mit einer elektrisch isolierenden Schutzschicht bedeckt ist.

10. Vorrichtung nach Anspruch 5 und einem der Ansprüche 8 oder 9, **dadurch gekennzeichnet, dass** der Träger (20) eine Schichtstruktur aufweist, die das gemeinsame erste leitfähige Teil (21) umfasst, das die erste Elektrode (11) und die dritte Elektrode (15) bildet, eine elektrisch isolierende Schicht (22), die das erste leitfähige Teil (21) auf der Seite des ersten leitfähigen Teils bedeckt, die entgegengesetzt zu der Anlagefläche (20A) ist, so dass das Dielektrikum des zweiten Kondensators (C2) gebildet wird, und ein zweites leitfähiges Teil (23), das die elektrisch isolierende Schicht (22) bedeckt, um die vierte Elektrode (16) und damit den zweiten Belag (C2_2) des zweiten Kondensators (C2) zu bilden.

11. Detektionsverfahren, das es ermöglicht, ein Inkontakttreten eines Materialabtragungswerkzeugs (5) mit einem elektrisch leitfähigen Einsatz (4), der in einem Gegenstand (2) vorhanden ist, bei einem Materialabtragungsvorgang zu detektieren, bei dem von dem Gegenstand (2) mittels des Materialabtragungswerkzeugs (5) mindestens ein Teil einer elektrisch isolierenden Beschichtung (3), die den mindestens einen elektrisch leitfähigen Einsatz (4) bedeckt, entfernt wird, wobei das Detektionsverfahren **dadurch gekennzeichnet ist, dass**:
- eine erste Elektrode (11) gegenüber dem Gegenstand (2), bevorzugt in Kontakt mit dem Gegenstand (2), in einem Abstand von dem elektrisch leitfähigen Einsatz (4) angeordnet wird, so dass mit dem elektrisch leitfähigen Einsatz (4) ein erster Zweipol (D1) gebildet wird, bei dem ein erster Anschluss (D1_1) durch die erste Elektrode (11) gebildet wird und ein zweiter Anschluss (D1_2) durch den elektrisch leitfähigen Einsatz (4) gebildet wird,
- eine zweite Elektrode (12) dem Materialabtragungswerkzeug (5) sp zugeordnet wird, dass, wenn das Materialabtragungswerkzeug (5) mit dem elektrisch leitfähigen Einsatz (4) in Kontakt tritt, eine elektrische Verbindung zwischen der zweiten Elektrode (12) und dem elektrisch leitfähigen Einsatz (4), der den zweiten Anschluss (D1_2) des ersten Zweipols (D1) bildet, hergestellt wird,
- eine Impedanzänderung einer den ersten Zweipol (D1) enthaltenden Detektionsschaltung (13) detektiert wird, die durch die elektrische Verbindung des ersten Zweipols (D1) mit der zweiten Elektrode (12) verursacht wird, wenn das Materialabtragungswerkzeug (5) mit dem elektrisch leitfähigen Einsatz (4) in Kontakt tritt.

12. Verfahren nach Anspruch 11, **dadurch gekennzeichnet, dass** die erste Elektrode (11) gegenüber dem Gegenstand (2), vorzugsweise in Kontakt mit dem Gegenstand (2), in einem Abstand von dem elektrisch leitfähigen Einsatz (4) angeordnet wird, so dass mit dem elektrisch leitfähigen Einsatz (4) ein Kondensator (C1), "erster Kondensator" (C1) genannt, gebildet wird, bei dem ein erster Belag (C1_1) durch die erste Elektrode (11) gebildet wird, entsprechend dem ersten Anschluss (D1_1) des ersten Zweipols (D1), und ein zweiter Belag (C1_2 ) durch den elektrischen leitfähigen Einsatz (4) gebildet wird, entsprechend dem zweiten Anschluss (D1_2) des ersten Zweipols (D1), und ein zweiter Kondensator (C2) vorgesehen wird, der von dem ersten Kondensator (C1) verschieden ist und bei dem der erste Belag (C2_1) elektrisch mit dem ersten Belag (C1_1) des ersten Kondensators (C1) verbunden ist, so dass ein Knoten (N1) gebildet wird, der dem ersten Kondensator (C1) und dem zweiten Kondensator (C2) gemeinsam ist, und die Impedanz an den Anschlüssen des zweiten Kondensators (C2) gemessen wird, um eine Impedanzänderung, vorzugsweise eine kapazitive Impedanzänderung, zu detektieren, die durch die elektrische Verbindung des ersten Kondensators (C1) mit der zweiten Elektrode (12) beim Inkontakttreten des Materialabtragungswerkzeugs (5) mit dem elektrisch leitfähigen Einsatz (4) bewirkt wird.

13. Verfahren nach Anspruch 11 oder 12, **dadurch gekennzeichnet, dass** der Gegenstand (2) eine Mehrzahl von unterschiedlichen Verstärkungslagen (36, 37, 38) umfasst, die jeweils spezifische Strukturen aus Verstärkungskorden besitzen, wobei die Verstärkungskorde elektrisch leitfähige Einsätze (4) bilden, und dass das Detektionsverfahren in der Lage ist, anhand der Impedanzänderung, die festgestellt wird, wenn das Materialabtragungswerkzeug (5) mit einem oder mehreren Verstärkungskorden einer der Verstärkungslagen (36, 37, 38) in Kontakt tritt, zu unterscheiden, mit welcher Struktur aus Verstärkungskorden und somit mit welcher Verstärkungslage (36, 37, 38) unter der Mehrzahl von vorhandenen Verstärkungslagen das Materialabtragungswerkzeug (5) in Kontakt getreten ist.

14. Verfahren zum Bearbeiten eines Reifens (30) wie etwa eines Luftreifens, der mindestens eine Gummischicht, die eine elektrisch isolierende Beschichtung (3) bildet, und mindestens eine Verstärkungslage (36, 37, 38), die metallische Verstärkungskorde, die elektrisch leitfähige Einsätze (4) bilden, umfasst, wobei das Bearbeitungsverfahren mindestens einen Schritt des Abrauens umfasst, bei dem mindestens ein Teil des die Verstärkungskorde bedeckenden Gummis mittels eines Materialabtragungswerkzeugs (5) wie einer Metallbürste oder Raspel abgetragen wird, wobei das Bearbeitungsverfahren **dadurch gekennzeichnet ist, dass** es ein Detektionsverfahren nach einem der Ansprüche 11 bis 13 einsetzt, um ein Inkontakttreten des Materialabtragungswerkzeugs (5) mit einem oder mehreren Verstärkungskorden zu detektieren.

## Claims

1. Material removal device (1) intended to work on an object (2), such as a pneumatic tyre, comprising an electrically insulating coating (3) that covers at least one electrically conductive insert (4), said device comprising at least one material removal tool (5) that is arranged so as to be able to remove some of the electrically insulating coating (3) from the object (2), said device being **characterized in that** it comprises a detection system (10) for detecting, through an impedance measurement, the material removal tool (5) coming into contact with the electrically conductive insert (4), said detection system (10) comprising: - a first electrode (11) that is arranged so as to be placed opposite the object (2), at a distance from the electrically conductive insert (4), so as to form, with said electrically conductive insert (4), a dipole (D1), referred to as "first dipole" (D1), a first terminal (D1_1) of which is formed by the first electrode (11) and a second terminal (D1_2) of which is formed by the electrically conductive insert (4),- a second electrode (12) that is associated with the material removal tool (5) such that, when the material removal tool (5) comes into contact with the electrically conductive insert (4), an electrical connection is established between said second electrode (12) and said electrically conductive insert (4) forming the second terminal (D1_2) of the first dipole (D1),- a control unit (14) that is arranged so as to measure an impedance of a detection circuit (13) containing the first dipole (D1) and to detect a variation in the impedance of said detection circuit (13) caused by the electrical connection of the first dipole (D1) to the second electrode (12) brought about by the material removal tool (5) coming into contact with the electrically conductive insert (4).

2. Device according to Claim 1, **characterized in that** the detection system (10) is a capacitive detection system (10) within which: - the first electrode (11) is arranged so as to be placed opposite the object (2), at a distance from the electrically conductive insert (4), so as to form, with said electrically conductive insert (4), a capacitor (C1), referred to as "first capacitor" (C1), a first plate (C1_1) of which is formed by the first electrode (11), corresponding to the first terminal (D1_1) of the first dipole (D1), and a second plate (C1_2) of which is formed by the electrically conductive insert (4), corresponding to the second terminal (D1_2) of the first dipole (D1),- and the control unit (14) is arranged so as to detect a variation in the impedance of the detection circuit (13) caused by the electrical connection of the first capacitor (C1) to the second electrode (12) brought about by the material removal tool (5) coming into contact with the electrically conductive insert (4) that forms the second plate (C1_2) of the first capacitor (C1).

3. Device according to Claim 1 or 2, **characterized in that** the detection circuit (13) comprises a second dipole (D2) that is distinct from the first dipole (D1), which second dipole (D2) has a first terminal (D2_1) that is electrically connected to the first terminal (D1_1) of the first dipole (D1) so as to form a node (N1) that is common to the first dipole (D1) and to the second dipole (D2), **in that** the control unit (14) measures the impedance across the terminals (D2_1, D2_2) of the second dipole (D2) in order to be able, on the one hand, to acquire a reference impedance value (Z2_ref, C2_ref), referred to as "no-load impedance" (Z2_ref, C2_ref), which is equal to an impedance value that said control unit (14) measures across the terminals of the second dipole (D2) while the material removal tool (5) is located at a distance from the electrically conductive insert (4), and, on the other hand, to detect, with respect to this no-load impedance (Z2_ref, C2_ref), a variation in impedance, preferably a variation in capacitive impedance, which is representative of an electrical connection of the first dipole (D1) to the second electrode (12) when the material removal tool (5) comes into contact with the electrically conductive insert (4).

4. Device according to Claim 3, **characterized in that** the detection system (10) comprises a third electrode (15) that corresponds to the first terminal (D2_1) of the second dipole (D2) and that forms a first plate (C2_1) of a capacitor (C2) referred to as "second capacitor" (C2), distinct from the first dipole (D1), and a fourth electrode (16) that corresponds to the second terminal (D2_2) of the second dipole (D2) and that forms a second plate (C2_2) of said second capacitor (C2).

5. Device according to Claims 2 and 4, **characterized in that** the first electrode (11) and the third electrode (15) are formed by one and the same common conductive part (21), referred to as "first conductive part", which is preferably made of metal and which simultaneously forms the first plate (C1_1) of the first capacitor (C1) and the first plate (C2_1) of the second capacitor (C2).

6. Device according to one of Claims 3, 4 or 5, **characterized in that** the second terminal (D1_2) of the first dipole (D1) and the second terminal (D2_2) of the second dipole (D2) are both electrically connected to a common conductive line (L1) that preferably belongs to the ground of the device (1), such that said second terminal (D1_2) of the first dipole (D1) and second terminal (D2_2) of the second dipole (D2) are at one and the same potential.

7. Device according to one of the preceding claims, **characterized in that** the control unit (14) applies an alternating excitation signal the frequency of which is greater than or equal to 10 kHz, preferably greater than or equal to 100 kHz, to the detection circuit (13).

8. Device according to one of the preceding claims, **characterized in that** the first electrode (11) is integrated within a support (20), such as a jaw, which has a bearing face (20A) that is intended to come into contact with the object (2) in order to hold said object (2) while it is being subjected to the action of the material removal tool (5).

9. Device according to Claim 8, **characterized in that** the bearing face (20A) of the support (20) is covered with an electrically insulating protective layer.

10. Device according to Claim 5 and either of Claims 8 and 9, **characterized in that** the support (20) has a layered structure that comprises the common first conductive part (21) forming the first electrode (11) and the third electrode (15), an electrically insulating layer (22) that covers said first conductive part (21) on the side of said first conductive part opposite the bearing face (20A), so as to form the dielectric of the second capacitor (C2), and a second conductive part (23) that covers said electrically insulating layer (22) to form the fourth electrode (16), and therefore the second plate (C2_2) of the second capacitor (C2).

11. Detection method for detecting a material removal tool (5) coming into contact with an electrically conductive insert (4) present in an object (2) in a material removal operation during which at least part of an electrically insulating coating (3) that covers said at least one electrically conductive insert (4) is removed from said object (2) by way of said material removal tool (5), said detection method being **characterized in that**:
- a first electrode (11) is placed opposite the object (2), preferably in contact with said object (2), at a distance from the electrically conductive insert (4), so as to form, with said electrically conductive insert (4), a first dipole (D1), a first terminal (D1_1) of which is formed by the first electrode (11) and a second terminal (D1_2) of which is formed by the electrically conductive insert (4),
- a second electrode (12) is associated with the material removal tool (5) such that, when the material removal tool (5) comes into contact with the electrically conductive insert (4), an electrical connection is established between said second electrode (12) and said electrically conductive insert (4) forming the second terminal (D1_2) of the first dipole (D1),
- a variation in the impedance of a detection circuit (13) containing the first dipole (D1) is detected, said variation being caused by the electrical connection of the first dipole (D1) to the second electrode (12) when the material removal tool (5) comes into contact with the electrically conductive insert (4).

12. Method according to Claim 11, **characterized in that** the first electrode (11) is placed opposite the object (2), preferably in contact with said object (2), at a distance from the electrically conductive insert (4), so as to form, with said electrically conductive insert (4), a capacitor (C1), referred to as "first capacitor" (C1), a first plate (C1_1) of which is formed by the first electrode (11) corresponding to the first terminal (D1_1) of the first dipole (D1) and a second plate (C1_2) of which is formed by the electrically conductive insert (4) corresponding to the second terminal (D1_2) of the first dipole (D1), and provision is made for a second capacitor (C2), distinct from the first capacitor (C1) and the first plate (C2_1) of which is electrically connected to the first plate (C1_1) of the first capacitor (C1) so as to form a node (N1) that is common to the first capacitor (C1) and to the second capacitor (C2), and the impedance across the terminals of the second capacitor (C2) is measured in order to detect a variation in impedance, preferably a variation in capacitive impedance, brought about by the electrical connection of the first capacitor (C1) to the second electrode (12) when the material removal tool (5) comes into contact with the electrically conductive insert (4).

13. Method according to Claim 11 or 12, **characterized in that** the object (2) comprises a plurality of different reinforcing plies (36, 37, 38) having reinforcing cable structures specific to each of them, said reinforcing cables forming electrically conductive inserts (4), and **in that** said detection method is able to distinguish, based on the variation in impedance observed when the material removal tool (5) comes into contact with one or more reinforcing cables of one of said reinforcing plies (36, 37, 38), the reinforcing cable structure, and therefore the reinforcing ply (36, 37, 38), out of the plurality of reinforcing plies that are present, with which said material removal tool (5) has come into contact.

14. Method for processing a tyre (30), such as a pneumatic tyre, which comprises at least one rubber layer forming an electrically insulating coating (3) and at least one reinforcing ply (36, 37, 38) comprising metal reinforcing cables forming electrically conductive inserts (4), said processing method comprising at least one hollowingout step during which at least part of the rubber covering the reinforcing cables is removed by way of a material removal tool (5), such as a metal brush or a rasp, said processing method being **characterized in that** it implements a detection method according to one of Claims 11 to 13 to detect the material removal tool (5) coming into contact with one or more reinforcing cables.
